(19) Europäisches Patentamt / European Patent Office / Office européen des brevets

(11) **EP 3 208 085 B1**

(12) **EUROPÄISCHE PATENTSCHRIFT**

(45) Veröffentlichungstag und Bekanntmachung des Hinweises auf die Patenterteilung:
**14.10.2020 Patentblatt 2020/42**

(51) Int Cl.:
***B32B 17/10*** *(2006.01)*

(21) Anmeldenummer: **17155308.4**

(22) Anmeldetag: **08.02.2017**

(54) **VERBUNDSCHEIBE**

COMPOUND GLAZING

VITRE COMPOSITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.02.2016 DE 102016001381**

(43) Veröffentlichungstag der Anmeldung:
**23.08.2017 Patentblatt 2017/34**

(73) Patentinhaber: **KRD Coatings GmbH**
**21357 Bardowick (DE)**

(72) Erfinder: **Neeb, Rolf**
**64367 Mühltal, Nieder-Ramstad (DE)**

(74) Vertreter: **Noack, Andreas**
**c/o Stolmár & Partner**
**Neuer Wall 71**
**20354 Hamburg (DE)**

(56) Entgegenhaltungen:
**EP-A1- 1 485 416 EP-A2- 0 507 727**
**EP-A2- 0 747 210 US-B1- 8 288 007**

- **CHRISTIAN LOUTER ET AL: "Durability of SG-laminated reinforced glass beams: Effects of temperature, thermal cycling, humidity and load-duration", CONSTRUCTION AND BUILDING MATERIALS, ELSEVIER, NETHERLANDS, Bd. 27, Nr. 1, 20. Juli 2011 (2011-07-20), Seiten 280-292, XP028102074, ISSN: 0950-0618, DOI: 10.1016/J.CONBUILDMAT.2011.07.046 [gefunden am 2011-07-26]**
- **-: "Technical Note TN306e: So You Want to Measure Surface Energy?", , 1. Juni 1999 (1999-06-01), XP055385676, Hamburg (DE) Gefunden im Internet: URL:https://www.kruss.de/fileadmin/user_upload/website/literature/kruss-tn306-en.pdf [gefunden am 2017-06-27]**
- **DIANA RYMUSZKA ET AL: "Influence of Volume Drop on Surface Free Energy of Glass", ANNALES UMCS, CHEMIA, Bd. 68, Nr. 1-2, 17. Januar 2014 (2014-01-17), Seiten 121-132, XP055385682, DOI: 10.2478/umcschem-2013-0010**
- **F HEJDA ET AL: "Surface Free Energy Determination by Contact Angle Measurements - A Comparison of Various Approaches", WDS'10 PROCEEDINGS OF CONTRIBUTED PAPERS, PART III, 1. Januar 2010 (2010-01-01), Seiten 25-30, XP055385686,**
- **ALGIRDAS LAZAUSKAS ET AL: "Float Glass Surface Preparation Methods for Improved Chromium Film Adhesive Bonding", MATERIALS SCIENCE, Bd. 18, Nr. 2, 20. Juni 2012 (2012-06-20), XP055147497, ISSN: 1392-1320, DOI: 10.5755/j01.ms.18.2.1924**
- **Ralf Maus: "Merkblatt 2014-033: Glasbruch - plötzlich und unerklärlich", , 20. August 2014 (2014-08-20), XP055386095, Bitburg (DE) Gefunden im Internet: URL:http://www.glas-fandel.de/images/PDFs/Merkblätter Fandel/M_2014-033_Glasbruch - plötzlich und unerklärlich.pdf [gefunden am 2017-06-28]**

EP 3 208 085 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

- -: , 9 February 2018 (2018-02-09), Retrieved from the Internet: URL:https://www.kruss-scientific.com/de/service/schulung-theorie/glossar/methode-nach-owens-wendt-rabel-und-kaelble-owrk
- "Benutzerhandbuch Mobile Surface Analyzer MSA + EG-Konformitätserklärung", 2014, Krüss GmbH, Hamburg (DE)

## Beschreibung

Die vorliegende Erfindung betrifft eine Verbundscheibe, die zwei Silikatglasscheiben umfasst, die durch eine Polymerisatschicht miteinander verbunden sind, wobei die Polymerisatschicht über kovalente Verbindungen mit den Silikatglasscheiben verbunden ist. Darüber hinaus betrifft die Erfindung ein Verfahren zur Herstellung einer Verbundscheibe, sowie ihre Verwendung.

Verbundmaterialien aus Glas und Kunststoff sind im Stand der Technik bekannt. So werden bei konventionellem Sicherheitsglas zwei Silikatglasscheiben mittels eines flexiblen Polymers verklebt, wodurch im Bruchfall die Splitter zusammengehalten werden. Die flexible Zwischenschicht kann z. B. aus Polyvinylbutyral (PVB) oder Polyurethan (PU)-Klebstoff bestehen. Klassischerweise werden derartige Verbundsysteme in einem Laminierverfahren bei hohem Druck bzw. hohen Temperaturen hergestellt, bei denen die brüchigen Außenschichten aus z. B. Glas mit einer Folie der flexiblen Zwischenschicht zusammengepresst und abgekühlt werden. Diese Vorgehensweise ist jedoch arbeitsaufwendig und erfordert hochspezialisierte Arbeitskräfte. Nachteilig bei der Verwendung von PVB sind ferner gelegentlich auftretende Blasen zwischen den einzelnen Schichten eines Verbundsystems. Darüber hinaus sind die bekannten Laminate nur in eingeschränktem Maße unter Belastung stabil. So kann sich die Verbindung zwischen Glasschicht und Zwischenschicht bei Belastung durch Stöße, Schläge oder extreme Witterung relativ schnell lösen.

Zur Verstärkung des Zusammenhalts zwischen den Schichten eines Verbundsystems wurde die Verwendung von Haftvermittlern, wie z.B. 3-Methacryloyloxypropyl-triethoxysilan (MEMO), beschrieben. MEMO wirkt als Haftvermittler indem es über eine Doppelbindung mit einem Poly(meth)acrylat, wie Polymethylmethacrylat (PMMA), polymerisiert und mit seinen Silanolgruppen eine Polykondensationsreaktion mit den freien OH-Gruppen des Silikatglases eingeht.

So beschreibt GB1600867 ein Verfahren, in dem zwischen den brüchigen Außenschichten aus z. B. Glas ein flüssiges, polymerisierbares Material an der offenen Oberseite eingefüllt wird und sich zwischen den Glasplatten durch Polymerisation verfestigt. Als geeignete Zwischenschichten wurden nicht- oder gering-schrumpfende Polymere wie Polyester, Vinylpolymere oder Epoxydharze angeführt, optional mittels Beimischung eines Haftvermittlers wie MEMO.

DE2951763 beschreibt ein Verbundsystem, bei dem ein (meth-)acrylatbasiertes photohärtbares, elastomeres Gießharz in Anwesenheit eines Silans (z. B. MEMO) als Haftvermittler bei Raumtemperatur unter Lichteinwirkung zwischen den steifen Glasplatten auspolymerisiert wird und dadurch als flexible Haftschicht wirkt, wobei das Prozedere im Falle ausreichender Fließfähigkeit dem in GB1600867 ähnelt.

Die beschriebenen Verbundsysteme weisen üblicherweise eine höhere Dicke der Glasscheiben gegenüber der Zwischenschicht auf, wodurch es zu einem insgesamt hohen Gewicht des Verbundes kommt. Andererseits ist die Haftung gegenüber mit Folien laminierten Verbundsystemen nicht entscheidend verbessert, so dass Ablösungen zwischen Glas und Polymer weiterhin möglich sind.

EP1485416 beschreibt Verbundsysteme mit reduziertem Gewicht, für die gegossenes PMMA als Ausgangsmaterial zur Polymerisation verwendet und ein Silan als Haftvermittler beigefügt wird. Der derart modifizierte PMMA-Kern kann eine höhere Dicke als die äußeren Silikatglasscheiben aufweisen. Solchermaßen hergestellte Verbundgläser zeichnen sich durch eine hohe Hagelbeständigkeit aus. Auf Grund der sehr unterschiedlichen thermischen Ausdehnungskoeffizienten des PMMA-basierten Kerns und der Silikatglasscheiben ist die Beständigkeit der Verbundsysteme gegenüber Temperaturwechseln jedoch stark beschränkt.

Aufgabe der vorliegenden Erfindung ist es daher, Verbundscheiben bereitzustellen, die alle Vorteile der vorgenannten Verbundsysteme und eine höhere Stabilität gegenüber Temperaturschwankungen und weiteren Belastungsarten aufweisen.

## Beschreibung

Diese Aufgabe wird durch eine Verbundscheibe gemäß der anhängenden Ansprüche gelöst. Die Verbundscheibe umfasst zwei Silikatglasscheiben , die durch eine Polymerisatschicht miteinander verbunden sind, wobei die Polymerisatschicht über kovalente Verbindungen durch einen Haftvermittler mit den Silikatglasscheiben verbunden ist, und die Verbundscheibe durch ein Verfahren erhältlich ist, in dem die Silikatglasscheiben vor der kovalenten Verbindung mit der Polymerisatschicht mindestens auf der der Polymerisatschicht zugewandten Kontaktfläche eine Oberflächenenergie von 65 mN/m oder mehr, vorzugsweise von 72 mN/m oder mehr, aufweisen.

Die kovalenten Verbindungen über welche die Polymerisatschicht durch einen Haftvermittler mit den Silikatglasscheiben verbunden ist, umfassen vorzugsweise (a) eine kovalente Verbindung zwischen dem Haftvermittler und einem in der Polymerisatschicht enthaltenen Polymer, wie z.B. einem Poly(meth)acrylat, und (b) eine kovalente Verbindung zwischen dem Haftvermittler und dem Silikatglas. Die kovalente Verbindung (a) zwischen dem Haftvermittler und einem in der Polymerisatschicht enthaltenen Polymer ist vorzugsweise durch eine Polymerisationsreaktion über eine Doppelbindung erhältlich. Die kovalente Verbindung (b) zwischen dem Haftvermittler und dem Silikatglas ist vorzugsweise über eine Polykondensations- oder Kondensationsreaktion erhältlich.

Die erfindungsgemäßen Verbundscheiben zeichnen sich überraschenderweise durch eine äußerst hohe Verbundhaftung aus, wodurch sich üblicherweise ausschließende Eigenschaften der eingesetzten Silikatglasscheiben und der Polymerisatschicht innerhalb eines Verbundes kombiniert werden können. Darüber hinaus zeigen die Verbundscheiben eine hohe Kratz- und Abriebfestigkeit, ein bemerkenswert niedriges Gewicht, ausgeprägte Barriereeigenschaften gegenüber Gasen, und eine hohe Stabilität gegenüber Temperaturschwankungen. Auf Grund dieser vorteilhaften Eigenschaften ist es möglich, mit den erfindungsgemäßen Verbundscheiben Verscheibungen großen Ausmaßes und überragender Stabilität herzustellen.

In der Regel weisen Silikatglasscheiben unmittelbar nach ihrer Herstellung eine Oberflächenenergie von weniger als 50 mN/m (Millinewton pro Meter) auf. Die Oberflächenenergie industriell gefertigter Silikatglasscheiben unterliegt großen Schwankungen, da sich die Oberflächenenergie durch Modifikationen des Herstellungsprozesses, die Umweltbedingungen während des Transports und der Lagerung und durch Alterung stark verändern kann. Da die Oberflächenenergie mit der Anzahl der als Bindungspartner für einen Haftvermittler zur Verfügung stehenden Hydroxygruppen (OH-Gruppen) korreliert, hat die Oberflächenenergie einen großen Einfluss auf die Stärke der Verbindung zwischen Silikatglasscheiben und einer Polymerisatschicht, die einen Haftvermittler enthält. Verbundscheiben, die mit Silikatglasscheiben von unterschiedlicher Oberflächenenergie erzeugt werden, haben daher stark unterschiedliche Eigenschaften. Insbesondere die Stabilität, z.B. die Stabilität gegenüber Temperaturschwankungen, variiert daher stark.

Wie anderswo hierin im Detail beschrieben, wird die Anzahl der freien OH-Gruppen auf der Glasoberfläche und die Oberflächenenergie erfindungsgemäß durch chemische oder physikalische Aktivierung der Glasoberfläche auf 65 mN/m oder mehr erhöht. Die Anzahl der freien OH-Gruppen auf der Silikatglasoberfläche wird vorzugsweise um 5% oder mehr, 10% oder mehr, 25% oder mehr oder 50% oder mehr erhöht. Bei Verwendung eines Haftvermittlers, der eine kovalente Verbindung mit dem Silikatglas über die freien OH-Gruppen eingeht, kann die kovalente Anbindung des Haftvermittlers an die Glasoberfläche so durch Erhöhung der verfügbaren Bindungspartner maßgeblich verbessert werden. Erfindungsgemäß erfolgt die kovalente Verbindung bevorzugt durch Polykondensation von Silanol-Gruppen an freie OH-Gruppen des Glases. Gleichzeitig erfolgt durch die Verwendung von aktivierten Silikatglasscheiben eine Standardisierung der Herstellungsprozesse, die eine aufwendige Kontrolle der initialen Oberflächenenergie und/oder eine Qualitätskontrolle der erzeugten Verbundscheiben überflüssig machen kann. Durch Aktivierung der Glasoberfläche wird die Oberflächenenergie ungeachtet der initialen Werte auf 65 mN/m oder mehr erhöht.

Vorteilhafterweise werden durch das erfindungsgemäße Erhöhen der Oberflächenenergie auch die unterschiedlichen Oberflächenenergien von Luft- und Zinnseite bei Floatglas nivelliert. Ein Resultat des Herstellungsprozesses von Floatglas ist, dass die Zinnseite eine oft deutlich geringere Oberflächenenergie aufweist als die Luftseite. Aus diesem Grund müsste in der Herstellung von Verbundscheiben mit Floatglas auf die Verwendung der Luftseite als Kontaktfläche zur Polymerisatschicht geachtet werden. Die Standardisierung der Oberflächenenergie im Rahmen der Erfindung macht eine solche Differenzierung überflüssig.

Verbundscheiben können alternativ durch Angabe der Dichte der kovalenten Verbindungen zwischen Polymer und dem Silikat beschrieben werden. In einem verwandten Aspekt wird hier eine Verbundscheibe beschrieben, die zwei Silikatglasscheiben umfasst, die durch eine Polymerisatschicht miteinander verbunden sind, wobei die Polymerisatschicht über kovalente Verbindungen durch einen Haftvermittler mit den Silikatglasscheiben verbunden ist, wobei mindestens 90% des an den Kontaktflächen zu den Silikatglasscheiben auf der Polymerisatschicht lokalisierten Haftvermittlers in den kovalenten Verbindungen gebunden sind, wobei die Polymerisatschicht vorzugsweise durch Polymerisation einer polymerisierbaren Zusammensetzung erhältlich ist, die mindestens 0,5 Gew.-% Haftvermittler enthält.

Die Verbundscheibe umfasst zwei Silikatglasscheiben, die durch eine Polymerisatschicht miteinander verbunden sind. Mit anderen Worten liegt die Polymerisatschicht zwischen den beiden Silikatglasscheiben. In der Regel werden die beiden Silikatglasscheiben und die Polymerisatschicht parallel oder im Wesentlichen parallel angeordnet sein.

Da die Polymerisatschicht jeweils an einer Kontaktfläche mit den beiden Silikatglasscheiben durch kovalente Verbindungen zwischen dem Polymer und den Silikatglasscheiben verbunden ist, gibt es in der Regel an den Kontaktflächen keinen Abstand zwischen der ersten Silikatglasscheibe und der Polymerisatschicht sowie zwischen der Polymerisatschicht und der zweiten Silikatglasscheibe.

Die Kontaktflächen zwischen der Polymerisatschicht und den Silikatglasscheiben können sich über mehr als 50%, mehr als 60%, mehr als 70%, mehr als 80%, mehr als 90%, mehr als 95% oder 100% einer Seite der Polymerisatschicht und/oder einer Seite der Silikatglasscheiben erstrecken. Eine "Kontaktfläche" ist die Fläche an der sich die Polymerisatschicht und die Silikatglasscheibe berühren und an der kovalente Verbindungen zwischen der Polymerisatschicht und der Silikatglasscheibe bestehen, bzw. die Fläche über die im erfindungsgemäßen Verfahren eine solche Berührung und solche Verbindungen erzeugt werden sollen. Die Silikatglasscheiben haben somit eine Kontaktfläche, die Polymerisatschicht hat zwei, da sie auf beiden Seiten mit je einer Silikatglasscheibe verbunden ist. Es ist besonders bevorzugt, dass die Kontaktflächen sich über mehr als 95% einer Seite der Polymerisatschicht und/oder der Silikatglasscheiben erstrecken. Es ist ferner bevorzugt, dass die Polymerisatschicht und die Silikatglasscheiben im Wesentlichen gleich lang und breit sind. Dies kann z.B. durch das Durchführen eines Besäumschnittes nach der Polymerisation erreicht werden. Entsprechende Schnittverfahren sind dem Fachmann bekannt.

Bevorzugt sind über 90% des an den Kontaktflächen zu den Silikatglasscheiben auf der Polymerisatschicht

lokalisierten Haftvermittlers in den kovalenten Verbindungen gebunden. Eine solch hohe Sättigung des zur Verfügung stehenden Haftvermittlers kann nur durch die hohe Zahl an zur Verfügung stehenden Bindungspartnern auf der Kontaktfläche der Silikatglasscheibe erzielt werden. Hierbei versteht es sich von selbst, dass die Formulierung "auf der Polymerisatschicht lokalisierter Haftvermittler" jegliche Haftvermittlermoleküle einschließt, die in der Polymerisatschicht derart lokalisiert sind, dass sie für eine Kondensationsreaktion an der Grenzfläche zum Silikatglas zur Verfügung stehen.

Um eine besonders feste Verbindung innerhalb der Verbundscheiben zu erzeugen, ist es bevorzugt, dass die Polymerisatschicht durch Polymerisation einer polymerisierbaren Zusammensetzung erhältlich ist, die mindestens 0,5 Gew.-% Haftvermittler enthält. Mit anderen Worten kann die polymerisierbare Zusammensetzung z.B. 0,5 Gew.-% oder mehr, 0,8 Gew.-% oder mehr, 1 Gew.-% oder mehr, 1,5 Gew.-% oder mehr, oder 5 Gew.-% oder mehr Haftvermittler enthalten. Es ist bevorzugt, dass die polymerisierbare Zusammensetzung von 0,5 Gew.-% bis 2 Gew.-% Haftvermittler enthält, z.B. etwa 1 Gew.-%.

Silikatglasscheiben und geeignete Verfahren zur Herstellung derselben sind dem Fachmann bekannt. Die Scheiben sind von einer Vielzahl von Anbietern erhältlich und umfassen Kieselsäure und/oder verschiedene Silikate, die an der Oberfläche der Silikatglasscheiben OH - bzw. $O^-$ - Gruppen präsentieren. Erfindungsgemäß können die Silikatglasscheiben z.B. Floatglasscheiben, chemisch oder physikalisch vorgespanntes Glas (wie Einscheibensicherheitsglas (ESG)), oder Borosilikatglas sein. Geeignete weitere Silikatgläser sind dem Fachmann bekannt.

Überraschenderweise ist es möglich, durch die sehr starke Verbindung zwischen den Silikatglasscheiben und der Polymerisatschicht auch vorgespanntes Glas zu verarbeiten und zu stabilisieren. In einer bevorzugten Ausführungsform sind die Silikatglasscheiben somit vorgespannte Silikatglasscheiben, besonders bevorzugt Einscheibensicherheitsglasscheiben (ESG-Scheiben). Verfahren zur chemischen oder physikalischen Vorspannung von Silikatglasscheiben sind dem Fachmann bekannt. Chemisch oder physikalisch vorgespanntes Glas ist durch seine Vorspannung in der Regel gegenüber einer Weiterverarbeitung durch Schneiden, Sägen oder Bohren sehr empfindlich. Erfindungsgemäße Verbundscheiben, die vorgespannte Silikatglasscheiben umfassen, können dagegen ohne Schadensbildung an den Verbundscheiben weiterverarbeitet werden.

Die Silikatglasscheiben weisen eine geringe Dicke auf. Hierdurch wird das Gewicht der Verbundscheiben deutlich reduziert. Bevorzugt liegt die Dicke der einzelnen Silikatglasscheiben zwischen 0,1 und 12 mm. In einer besonders bevorzugten Ausführungsform weisen die Silikatglasscheiben eine Dicke von 0,5 bis 3 mm, besonders bevorzugt von etwa 1 mm, auf.

Die Polymerisatschicht wird wie an anderer Stelle hierin beschrieben durch Polymerisation einer polymerisierbaren Zusammensetzung erzeugt. Es ist somit bevorzugt, dass die Polymerisatschicht durch Polymerisation einer hierin beschriebenen polymerisierbaren Zusammensetzung erhältlich ist. Die Polymerisatschicht umfasst bevorzugt Poly(meth)acrylate. Poly(meth)acrylate werden durch Polymerisation von Mischungen erhalten, die (Meth)acrylate enthalten. Geeignete (Meth)acrylate sind dem Fachmann bekannt und an anderer Stelle hierin beschrieben.

Die Polymerisatschicht kann z.B. aus mindestens 60 Gew.-%, 70 Gew.-%, 80 Gew.-%, 85 Gew.-%, 90 Gew.-%, oder 95 Gew.-% Poly(meth)acrylaten bestehen. Vorzugsweise besteht die Polymerisatschicht zu mindestens 90 Gew.-% aus Poly(meth)acrylaten, mehr bevorzugt zu mindestens 95 Gew.-%. In einer besonders bevorzugten Ausführungsform besteht die Polymerisatschicht zu mindestens 90 Gew.-% aus PMMA - Verbindungen.

Die Polymerisatschicht weist bevorzugt eine Dicke von 1 bis 20 mm auf, stärker bevorzugt von 3 bis 15 mm. In einer besonders bevorzugten Ausführungsform weist die Polymerisatschicht eine Dicke von 5 bis 12 mm auf. Es ist erfindungsgemäß besonders bevorzugt, dass die Polymerisatschicht eine Dicke von etwa 8 mm aufweist. Die Polymerisatschicht kann jedoch auch dicker als 20 mm sein. Entsprechende Verfahren zur Erzeugung besonders dicker Polymerisatschichten sind dem Fachmann bekannt. Die Polymerisatschicht ist dabei vorzugsweise dicker als die einzelnen Silikatglasscheiben.

Die Polymerisatschicht ist über kovalente Verbindungen mit den Silikatglasscheiben verbunden. Zu diesem Zweck umfasst die polymerisierbare Zusammensetzung einen Haftvermittler, der eine kovalente Verbindung mit den in der polymerisierbaren Zusammensetzung enthaltenen (Meth)acrylaten und eine weitere kovalente Verbindung mit den Silikatglasscheiben, vorzugsweise mit einer Siliziumverbindung in den Silikatglasscheiben, eingeht.

Geeignete Haftvermittler sind dem Fachmann bekannt. Der Haftvermittler ist eine Verbindung und in der Lage, die Silikatglasscheiben kovalent mit der Polymerisatschicht zu verbinden. Vorzugsweise enthält der Haftvermittler mindestens eine, besonders bevorzugt drei, Silanolgruppen. Silanolgruppen sind in der Lage, mit freien OH-Gruppen auf der Silikatglasoberfläche, z.B. mit den freien OH-Gruppen einer Siliziumverbindung im Silikatglas, zu kondensieren. Der Haftvermittler ist somit vorzugsweise in der Lage, über eine Kondensationsreaktion mit freien OH-Gruppen an der Silikatoberfläche eine kovalente Verbindung mit den Silikatglasscheiben einzugehen. Darüber hinaus ist der Haftvermittler in der Lage, eine kovalente Verbindung mit den in der polymerisierbaren Zusammensetzung enthaltenen (Meth)acrylaten einzugehen, wobei die kovalente Verbindung vorzugsweise über eine Polymerisationsreaktion über z.B. eine Doppelbindung entsteht.

Geeignete Haftvermittler sind z.B. Siliciumverbindungen der Formel (1):

$$[Si]_S R_n^1 R_m^2 O_p X_q \qquad (1)$$

wobei $R^1$ eine chemisch ungesättigte Kohlenstoff-Kohlenstoffgruppe aufweist und vorzugsweise ein Alkenyl- oder Cycloalkenylrest mit 2 bis 12 Kohlenstoffatomen ist, der eine oder mehrere Estergruppen aufweisen kann,
$R^2$ ein Alkyl- oder Cycloalkylrest mit 1 bis 12 Kohlenstoffatomen ist,
X ein Halogenatom oder eine Alkoxygruppe mit 1 bis 8 Kohlenstoffatomen ist, vorzugsweise mit 1 bis 6 Kohlenstoffatomen,
s eine ganze Zahl größer gleich 1 ist,
n eine ganze Zahl von 1 und 2*s+1 ist,
m eine ganze Zahl von 0 bis 2*s ist,
p eine ganze Zahl von 0 bis s-1 ist,
q eine ganze Zahl von 1 bis 2*s+1 ist, und
wobei s, n, m und q der folgenden Beziehung genügen:

$$n + m + 1 = 2*s + 2$$

Dem Fachmann sind solche, als Haftvermittler wirkende, Siliciumverbindungen der Formel (1) bekannt. Beispielsweise sind geeignete Siliciumverbindungen der Formel (1) in EP1485416 beschrieben.

Siliciumverbindungen, die als Haftvermittler geeignet sind, sind z.B. Alkyltrialkoxysilane, Dialkyldialkoxysilane, Trialkylalkoxysilane, Alkylsilyltrihalogenide, Dialkylsilyldihalogenide, Trialkylsilylhalogenide, Trichloromethylsilan, Dichlorodimethylsilan, Chlorotrimethylsilan, Tribromomethylsilan, Dibromodimethylsilan, Bromotrimethylsilan, Trichloroethylsilan, Dichlorodiethylsilan, Chlorotriethylsilan, Tribromoethylsilan, Dibromodiethylsilan, Bromotriethylsilan, Trimethoxymethylsilan, Dimethoxydimethylsilan, Methoxytrimethylsilan, Triethoxymethylsilan, Diethoxydimethylsilan, Ethoxytrimethylsilan, Trimethoxyethylsilan, Dimethoxydiethylsilan, Methoxytriethylsilan, Triethoxymethylsilan, Vinyltrimethoxysilan, y-Methacryloxyethyl-trimethoxysilan, y-Acryloxyethyl- trimethoxysilan, y-Methacryloxypropyltrimethoxysilan, y-Acryloxypropyl-trimethoxysilan, Vinyltriethoxysilan, y-Methacryloxyethyltriethoxysilan, y-Acryloxyethyl- triethoxysilan, y-Methacryloxypropyl-triethoxysilan, y-Acryloxypropyl-triethoxysilan, Vinyltrichlorosilan, y-Methacryloxyethyl-trichlorosilan, y-Acryloxyethyl-trichlorosilan, y-Methacryloxypropyl-trichlorosilan, y-Acryloxypropyltrichlorosilan, Vinyltribromosilan, y-Methacryloxyethyl-tribromosilan, y-Acryloxyethyltribromosilan, y-Methacryloxypropyl-tribromosilan, y-Acryloxypropyl-tribromosilan, y-Methacryloxypropyl-triethoxysilan, y-Acryloxypropyl-triethoxysilan, y-Methacryloxypropyltrimethoxysilan, y-Acryloxypropyl-trimethoxysilan und/oder Vinyltriethoxysilan, insbesondere 3-Methacrloyloxypropyl-triethoxysilan (MEMO). Ein besonders bevorzugter Haftvermittler ist 3-Methacryloyloxypropyl-triethoxysilan (MEMO).

Eine Verbundscheibe, bei der die Polymerisatschicht Polymethylmethacrylat (PMMA) - Verbindungen und MEMO - Verbindungen umfasst, ist besonders bevorzugt. "Verbindungen" in diesem Zusammenhang bezeichnet alle chemischen Verbindungen, die PMMA bzw. MEMO umfassen, insbesondere Polymere und/oder Copolymere, die PMMA und/oder MEMO und/oder deren Polymerisationsprodukte enthalten.

Wie oben beschrieben, sind vorzugsweise mindestens 90% des an den Kontaktflächen zu den Silikatglasscheiben auf der Polymerisatschicht lokalisierten Haftvermittlers in den kovalenten Verbindungen gebunden. Eine solch hohe Dichte an kovalenten Verbindungen wird durch hohe Oberflächenenergie der Silikatglasscheiben und die vorangegangene Aktivierung der Scheiben ermöglicht. Erfahrungsgemäß ist die Polymerisatschicht vorzugsweise durch Polymerisation einer polymerisierbaren Zusammensetzung erhältlich, die mindestens 0,5 Gew.-% Haftvermittler enthält. Auf diese Weise wird sichergestellt, dass eine ausreichende Menge an Haftvermittler für die kovalente Verbindung zwischen den Silikatglasscheiben und der Polymerisatschicht zur Verfügung stehen. Dies soll nicht ausschließen, dass eine geringere Menge an Haftvermittler verwendet werden kann. So kann die polymerisierbare Zusammensetzung z.B. mindestens 0,2 Gew.-%, mindestens 0,5 Gew.-%, mindestens 1 Gew.-%, oder mindestens 1,5 Gew.-% enthalten. In einer besonders bevorzugten Ausführungsform enthält die polymerisierbare Zusammensetzung 1 Gew.-% oder mehr Haftvermittler. Anders gesagt enthält die polymerisierbare Zusammensetzung vorzugsweise von 0,5 bis 5 Gew.-% Haftvermittler, stärker bevorzugt von 1 bis 2 Gew.-%.

Die Verbundscheibe ist durch ein Verfahren erhältlich, in dem die Silikatglasscheiben vor der kovalenten Verbindung mit der Polymerisatschicht mindestens auf der der Polymerisatschicht zugewandten Kontaktfläche eine Oberflächenenergie von 65 mN/m oder mehr aufweisen.

Die Oberflächenenergie kann somit z.B. 65 mN/m, 66 mN/m, 67 mN/m, 68 mN/m, 69 mN/m, 70 mN/m, 71 mN/m, 72 mN/m, 73 mN/m, 74 mN/m, 75 mN/m, 76 mN/m, oder mehr betragen. Vorzugsweise weisen die Silikatglasscheiben vor der kovalenten Verbindung mit der Polymerisatschicht mindestens auf der der Polymerisatschicht zugewandten Kontaktfläche eine Oberflächenenergie von 72 mN/m oder mehr auf.

Die Silikatglasscheiben wiesen diese Oberflächenenergiewerte unmittelbar vor der Herstellung des Verbundes

auf. Auf diese Weise wird verhindert, dass die Oberflächenenergiewerte z. B. durch eine längere Lagerung wieder auf weniger als65 mN/m absinken. In bevorzugten Ausführungsformen betrifft die Erfindung daher Verbundscheiben, deren Silikatglasscheiben unmittelbar vor der kovalenten Verbindung mit der Polymerisatschicht mindestens auf der der Polymerisatschicht zugewandten Kontaktfläche eine Oberflächenenergie von 65 mN/m oder mehr aufweisen bzw. aufwiesen, bevorzugt 72 mN/m oder mehr. "Unmittelbar" bedeutet in diesem Zusammenhang, dass die Silikatglasscheiben, die eine Kontaktfläche mit einer Oberflächenenergie von 65 mN/m oder mehr aufweisen, so zeitnah in dem Verbund verarbeitet werden, dass ihre Oberflächenenergie nicht unter einen Wert von 65 mN/m abgesunken ist, bevorzugt nicht unter einen Wert von 72 mN/m.

Anders gesagt, weisen die Silikatglasscheiben die hierin genannten Oberflächenenergiewerte bei (d. h. zum Zeitpunkt) der Herstellung des Verbundes auf, insbesondere zum Zeitpunkt der Herstellung der kovalenten Verbindungen. In bevorzugten Ausführungsformen betrifft die Erfindung daher Verbundscheiben, deren Silikatglasscheiben bei der kovalenten Verbindung mit der Polymerisatschicht mindestens auf der der Polymerisatschicht zugewandten Kontaktfläche eine Oberflächenenergie von 65 mN/m oder mehr aufweisen bzw. aufwiesen, bevorzugt 72 mN/m oder mehr.

Eine Überprüfung der Oberflächenenergiewerte und/oder entsprechende Erhöhung der Oberflächenenergie kann z. B. am gleichen Tag erfolgt sein, z. B. 12 h oder weniger vor der Herstellung der kovalenten Verbindung innerhalb des Verbundes, bevorzugt 6 h oder weniger. Daher betreffen bevorzugte Ausführungsformen insbesondere Verbundscheiben, deren Silikatglasscheiben 12 h oder weniger, bevorzugt 6 h oder weniger, vor der kovalenten Verbindung mit der Polymerisatschicht mindestens auf der der Polymerisatschicht zugewandten Kontaktfläche eine Oberflächenenergie von 65 mN/m oder mehr aufweisen bzw. aufwiesen, bevorzugt 72 mN/m oder mehr.

Da die Oberflächenenergie von Silikatglas in der Regel deutlich unterhalb dieser Werte liegt, wird eine erfindungsgemäß geeignete Silikatglasscheibe vorzugsweise durch Aktivierung mindestens einer Kontaktfläche erzeugt. Durch die Aktivierung der Kontaktfläche bzw. der Silikatglasscheibe wird die Oberflächenenergie erhöht und die Anzahl der an der Oberfläche verfügbaren Hydroxygruppen vermehrt.

Die Aktivierung kann mittels eines chemischen Anätzverfahrens, wie z.B. der Behandlung mit einer alkalischen wässrigen Lösung; oder mittels eines physikalischen Anätzverfahrens, wie z.B. der Corona-, Ozon- und/oder (Linear-)Plasmabehandlung, erfolgen.

Die Aktivierung kann insbesondere eine Behandlung der Oberfläche mit einem Plasma, einem ionisierten Gas, wie z.B. Luft, Sauerstoff, Stickstoff, Argon, Wasserstoff, Helium und Ammoniak oder einer Mischung dieser Gase, und/oder einem Ionenstrahl umfassen.

Die Behandlung mit einer alkalischen wässrigen Lösung, wie Kaliumhydroxidlösung, ist erfindungsgemäß besonders bevorzugt. Eine alkalische wässrige Lösung ist eine homogene Mischung zwei oder mehrerer Komponenten, von denen eine zwingend Wasser, die andere notwendigerweise eine Base ist, wobei letztere durch Auflösung in Wasser den pH-Wert der Lösung auf > 7 erhöht. Eine besonders bevorzugte basische Komponente (Base) in der vorliegenden Erfindung ist Kaliumhydroxid. Alkalische wässrige Lösungen sind dem Fachmann bekannt und umfassen z.B. LiOH-, NaOH-, und KOH- Lösungen. KOH-Lösungen sind erfindungsgemäß besonders bevorzugt.

Geeignete Konzentrationen der alkalischen wässrigen Lösung kann der Fachmann z.B. durch einfache Inkubationstests mit anschließender Messung der Oberflächenenergie der Silikatglasscheiben ermitteln. Es hat sich herausgestellt, dass z.B. alkalische wässrige Lösungen geeignet sind, die zwischen 1 und 15 % der Base umfassen, wie z.B. 3 % oder 10 % Base. In bevorzugten Ausführungsformen ist die alkalische wässrige Lösung somit einbis 15-prozentig, vorzugsweise ein- bis zehnprozentig, wobei sich die Prozentangaben auf die Konzentration der Base beziehen.

Neben dem Aktivierungsmittel (der Base) kann die alkalische wässrige Lösung weitere Zusatzstoffe umfassen, welche die Anwendungseigenschaften der Lösung positiv beeinflussen, ohne die Aktivierung negativ zu beeinflussen. Geeignete Zusatzstoffe sind z.B. Co-Lösungsmittel und/oder Viskositätsregler. Co-Lösungsmittel verbessern die Benetzung der Silikatglasscheibe und können z.B. ausgewählt sein aus der Gruppe der Alkohole, wie z. B. Methanol, Ethanol, Isopropanol, Butanol, und andere. Alternativ kann das Co-Lösungsmittel auch vor dem Aktivieren der Glasscheibe mit der alkalischen wässrigen Lösung mit der Scheibe in Kontakt gebracht werden. Ein geeigneter Viskositätsregler ist z. B. Glykol.

Durch den außerordentlich starken Zusammenhalt zwischen den Silikatglasscheiben und der Polymerisatschicht sind die erfindungsgemäßen Verbundscheiben temperaturstabil und können eine Größe von über 3 $m^2$ aufweisen.

In einem weiteren Aspekt betrifft die Erfindung ein Verfahren zur Herstellung einer Verbundscheibe gemäß der anliegenden Ansprüche. Das Verfahren umfasst Schritte, bei denen man

(a) zwei Silikatglasscheiben bereitstellt und die Oberflächenenergie auf jeweils mindestens einer Kontaktfläche der Silikatglasscheiben auf 65 mN/m oder mehr, vorzugsweise auf 72 mN/m oder mehr, erhöht;
(b) eine polymerisierbare Zusammensetzung zwischen die Kontaktflächen der zwei Silikatglasscheiben einbringt, wobei die polymerisierbare Zusammensetzung ein polymerisierbares und/oder vorpolymerisiertes Monomer, und einen Haftvermittler umfasst; und
(c) die polymerisierbare Zusammensetzung zwischen den Kontaktflächen der Silikatglasscheiben Polymerisationsbedingungen aussetzt, unter denen kovalente Verbindungen zwischen dem Haftvermittler und den Kontaktflächen der Silikatglasscheiben und zwischen dem Haftvermittler und der polymerisierbaren Zusammensetzung entstehen.

Geeignete Verfahren zur Erhöhung der Oberflächenenergie in Schritt a) sind hierin beschrieben. Zum Beispiel kann die Oberflächenenergie durch Behandlung mit einem Anätzverfahren, wie z.B. der Behandlung mit einer alkalischen wässrigen Lösung, mittels Corona-, Ozon- und/oder (Linear-)Plasmabehandlung erhöht werden. In einer besonders bevorzugten Ausführungsform wird die Oberflächenenergie in Schritt a) durch Behandlung der Kontaktfläche(n) mit einer Kaliumhydroxidlösung erhöht.

Die polymerisierbaren Zusammensetzungen umfassen Monomere, Oligomere und/oder Polymere und sind dadurch charakterisiert, dass sich ihr Molekulargewicht mittels eines gängigen Polymerisationsverfahren erhöhen lässt. Gängige Polymerisationsverfahren und - bedingungen sind dem Fachmann bekannt und umfassen beispielsweise radikalische, anionische und kationische Polymerisation. Als Monomere werden die einzelnen Bausteine des entsprechenden Polymers definiert, als Oligomere Polymere mit einem zahlenmittleren Polymerisationsgrad Pn mit n = 2 - 10. Für Polymere gilt n > 10. Geeignete polymerisierbare Zusammensetzungen sind dem Fachmann bekannt und hierin beschrieben.

Insbesondere enthält die polymerisierbare Zusammensetzung ein polymerisierbares und/oder vorpolymerisiertes Monomer. Ein "vorpolymerisiertes" Monomer bezeichnet in diesem Zusammenhang ein Oligomer und/oder Polymer, die durch Polymerisation aus dem Monomer und/oder durch Copolymerisation von dem Monomer mit einem oder mehreren von dem Monomer verschiedenen weiteren Monomeren, erhältlich sind. Somit ist der hierin verwendete Begriff "vorpolymerisiertes" Monomer gleichbedeutend mit "Polymer und/oder Copolymer, welches durch Polymerisation bzw. Copolymerisation mindestens eines Monomers erhältlich ist".

Geeignete polymerisierbare Zusammensetzungen und Polymerisationsbedingungen sind in EP 1 485 416 B1 beschrieben. Die auf die Zusammensetzung der polymerisierbaren Zusammensetzungen und die Polymerisationsbedingungen bezogenen Ausführungen in EP 1 485 416 B1 sind hierin durch Bezugnahme aufgenommen.

In bevorzugten Ausführungsformen umfasst die polymerisierbare Zusammensetzung daher die Zusammensetzungen 1 und 2, wobei Zusammensetzung 1 umfasst oder besteht aus:

(A) 0,5 - 5 Gewichtsteilen einer hierin und/oder EP 1 485 416 B1 beschriebenen Siliciumverbindung der Formel (I);
(B) 0,01 - 2 Gewichtsteilen Wasser; und
(C) 0 - 4,0 Gewichtsteilen mindestens einer Säure;

und wobei Zusammensetzung 2 umfasst oder besteht aus:

D) 0 - 5,0 Gewichtsteilen mindestens eines (Meth)acrylates der Formel:

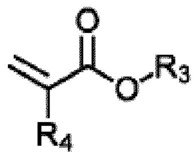

(II)

wobei $R_3$ ein aliphatischer oder cycloaliphatischer Rest mit 1 - 20 Kohlenstoffatomen ist, der mindestens eine Hydroxyl- Thiol-, primäre oder sekundäre Amino- und/oder eine Epoxygruppe aufweist,
$R_4$ ein Wasserstoffatom oder eine Methylgruppe ist;

E) 55 - 98,99 Gewichtsteilen eines polymerisierbaren, von D) verschiedenen Monomers, vorzugsweise eines ethylenisch ungesättigten Monomers;
F) 0 - 30 Gewichtsteilen mindestens eines Polymers und/oder Copolymers, welches durch Polymerisation bzw. Copolymerisation mindestens eines ethylenisch ungesättigten Monomeren E) erhältlich ist;
G) 0 - 3 Gewichtsteilen von weiteren Zuschlagstoffen, welche das Polymerisat in seinen Eigenschaften zu modifizieren vermögen.

Die oben genannten Komponenten der polymerisierbaren Zusammensetzung wurden in EP 1 485 416 B1 genau beschrieben. Die Ausführungen bezüglich der Struktur und der Mengen an einzusetzenden Komponenten aus EP 1 485 416 B1 sind hierin durch Bezugnahme ausdrücklich aufgenommen. Die polymerisierbare Zusammensetzung wird vorzugsweise durch Umsetzen der Komponenten der Zusammensetzung 1 und anschließender Zugabe der Komponenten der Zusammensetzung 2 erhalten.

Geeignete (Meth)acrylate der Formel (II) sind dem Fachmann daher bekannt und schließen z.B. die folgenden ein: Hydroxyalkyl(meth)acrylate, wie 3-Hydroxypropyl(meth)acrylat, 3, 4-Dihydroxybutyl(meth)acrylat, 2-Hydroxyethyl(meth)acrylat, 2-Hydroxypropyl(meth) acrylat, 2,5-Dimethyl-1,6-hexandiol(meth)acrylat, 1,10-Decandiol(meth)acrylat und 1, 2-Propandiol (meth) acrylat; Polyoxyethylen- und Polyoxypropylen- Derivate der (Meth) acrylsäure, wie Triethylenglykol(meth)acrylat, Tetraethylenglykol(meth)acrylat und Tetrapropylenglykol(meth)acrylat; Aminoalkyl(meth)acrylate, wie 2-[N,N-Dimethylamino]-ethyl(meth)acrylat, 3-[N,N-Dimethylamino]-propyl(meth)acrylat und 2-(4-Morpholinyl) ethyl(meth)acrylat; Oxiranyl(meth)acrylate, wie 2,3-Epoxybutyl(meth)acrylat, 3,4-Epoxybutyl (meth) acrylat und Glycidyl (meth) acrylat; Mercaptoalkyl (meth) acrylate, wie 2-Mercaptoethyl (meth) acrylat und 3-Mercaptopropyl (meth) acrylat. Geeignete (Meth)acrylate sind ferner z.B. Hydroxylalkyl (meth) acrylate, Aminoalkyl (meth) acrylate, Oxiranyl (meth) acrylate und Mercaptoalkyl (meth) acrylate, insbesondere Glycidyl (meth) acrylat. Ein besonders bevorzugtes (Meth)acrylat der Formel (II) ist Glycidylmethacrylat (GMA).

Die polymerisierbare Zusammensetzung kann z.B. von 0 bis 5 Gew.-%, vorzugsweise von 0,5 bis 5 Gew.-% des (Meth)acrylates der Formel (II) umfassen. In einer bevorzugten Ausführungsform enthält die polymerisierbare Zusammensetzung von 0,5 bis 5 Gew.-% GMA, stärker bevorzugt zwischen 1 und 3 Gew.-%.

Polymerisierbare, von D) verschiedene Monomere sind dem Fachmann ebenfalls bekannt und sind detailliert in EP 1 485 416 B1 beschrieben. Sie umfassen vorzugsweise alle, von D) verschiedene organische Verbindungen, die mindestens eine ethylenische Doppelbindung aufweisen. In einer besonders bevorzugten Ausführungsform ist das polymerisierbare, von D) verschiedene Monomer Methylmethacrylat (MMA).

Die polymerisierbare Zusammensetzung kann z.B. von 55 bis 98,99 Gew.-%, vorzugsweise von 85 bis 98,99 Gew.-% des polymerisierbaren, von D) verschiedenen Monomers enthalten. In einer bevorzugten Ausführungsform enthält die polymerisierbare Zusammensetzung von 55 bis 98,99 Gew.-%, vorzugsweise von 85 bis 98,99 Gew, MMA (und/oder vorpolymerisiertes MMA).

Die Zusammensetzung 2 kann ferner mindestens ein Polymer und/oder Copolymer umfassen, das durch Polymerisation bzw. Copolymerisation der Monomere D) erhältlich ist. Hierdurch kann z.B. die Verarbeitbarkeit der Zusammensetzung durch Erhöhung der der Viskosität verbessert werden.

Weitere Zuschlagstoffe, welche das Polymerisat in seinen Eigenschaften zu modifizieren vermögen, sind dem Fachmann bekannt und in der EP 1 485 416 B1 beschrieben. Geeignete Zuschlagstoffe umfassen z.B. Polymerisationsinitiatoren, wie 2,2'-Azo-bis-isobutyronitril (AIBN), Di(4-tert.butylcyclohexyl)peroxydicarbonate (BCHPC), und 2,2'-Azobis-2,4-dimethylvaleronitrile (ADVN). Erfindungsgemäß ist AIBN ein besonders bevorzugter Zuschlagsstoff.

Insbesondere führt die Kombination von Glycidylmethacrylat (GMA) (als (Meth) acrylat D) mit MEMO (als Silicium-Verbindung A)) und MMA (als polymerisierbares, von D) verschiedenes Monomer) zu einer ganz besonderen Verbesserung der Stabilität der Verbundscheiben. GMA ist in der Lage, das bei der Erzeugung der kovalenten Verbindungen zwischen Silikatglasscheiben und Polymerisatschicht entstehende Wasser, sowie Methanol abzufangen. Hierdurch wird u.a. Unregelmäßigkeiten in den Verbundscheiben vorgebeugt.

In besonders bevorzugten Ausführungsformen umfasst daher die polymerisierbare Zusammensetzung die Zusammensetzungen 1 und 2, wobei Zusammensetzung 1 Z 3-Methacryloyloxypropyl-triethoxysilan (MEMO) umfasst; und die Zusammensetzung 2 Methylmethacrylat (MMA) (und/oder vorpolymerisiertes Methylmethacrylat) und Glycidylmethacrylat (GMA) umfasst. Die polymerisierbare Zusammensetzung ist somit durch Vermengung bzw. Umsetzung von MEMO, MMA (und/oder vorpolymerisierte MMA) und GMA erhältlich.

Die Zusammensetzung 1 kann z.B. 0,5 - 5 Gew.-% MEMO umfassen, während die Zusammensetzung 2 0 - 5,0 Gew.-% GMA und 55 - 98,99 Gew.-% MMA umfasst. In dieser Ausführungsform betrifft die Erfindung ein Verfahren zur Herstellung einer Verbundscheibe, Schritte umfassend, bei denen man

a) zwei Silikatglasscheiben bereitstellt und die Oberflächenenergie auf jeweils mindestens einer Kontaktfläche der Silikatglasscheiben auf 65 mN/m oder mehr, vorzugsweise auf 72 mN/m oder mehr, erhöht;

b) eine polymerisierbare Zusammensetzung zwischen die Kontaktflächen der zwei Silikatglasscheiben einbringt, wobei die polymerisierbare Zusammensetzung die Zusammensetzungen 1 und 2 umfasst, wobei Zusammensetzung 1 0,5 - 5 Gew.-% MEMO umfasst, und Zusammensetzung 2 0 - 5,0 Gew.-% GMA und 55 - 98,99 Gew.-% MMA umfasst, (bzw. die polymerisierbare Zusammensetzung durch Umsetzung mindestens dieser Verbindungen erhältlich ist); und

c) die polymerisierbare Zusammensetzung zwischen den Kontaktflächen der Silikatglasscheiben Polymerisationsbedingungen aussetzt, unter denen kovalente Verbindungen zwischen dem Haftvermittler MEMO und den Kontaktflächen der Silikatglasscheiben und zwischen dem Haftvermittler MEMO und der polymerisierbaren Zusammensetzung (insbesondere dem in der polymerisierbaren Zusammensetzung enthaltenen MMA und daraus polymerisiertem PMMA) entstehen.

In einer besonders bevorzugten Ausführungsform umfasst die polymerisierbare Zusammensetzung 0,5 - 5 Gew.-% MEMO, 0,5 - 5,0 Gew.-% GMA und 85 - 98,99 Gew.- % MMA (bzw. ist durch Vermengung bzw. Umsetzung

mindestens dieser Verbindungen erhältlich).

Es ist dabei besonders stark bevorzugt, dass die Zusammensetzung 1 umfasst:

A) 0,5 - 5 Gewichtsteile MEMO;
B) 0,01 - 2 Gewichtsteile Wasser; und
C) 0 - 4,0 Gewichtsteile Methacrylsäure;

und die Zusammensetzung 2 umfasst:

D) 0 - 5,0 Gewichtsteile GMA;
E) 55 - 98,99 Gewichtsteile MMA;
F) 0 - 3 Gewichtsteile AIBN und/oder BCHPC.

Die polymerisierbare Zusammensetzung wird in Schritt b) des Verfahrens zwischen die Kontaktflächen der zwei Silikatglasscheiben eingebracht. Es ist bevorzugt, dass die Einbringung der polymerisierbaren Zusammensetzung mittels eines Gießverfahrens durchgeführt wird. Hierfür werden die Silikatglasscheiben voneinander beabstandet bereitgestellt, wobei die Silikatglasscheiben vorzugsweise im Wesentlichen parallel zueinander sind, und die polymerisierbare Zusammensetzung wird zwischen die Silikatglasscheiben gegossen. Dabei füllt die polymerisierbare Zusammensetzung vorzugsweise nach Ende des Gussvorganges im Wesentlichen den gesamten Zwischenraum zwischen den beabstandeten Silikatglasscheiben aus. Entsprechende Gussverfahren sind im Stand der Technik bekannt.

Der Abstand zwischen den beiden Silikatglasscheiben richtet sich nach der gewünschten Dicke der Polymerisatschicht. Somit entspricht der Abstand z.B. den für diese Polymerisatschicht genannten bevorzugten Werten, z.B. 1 bis 20 mm, wie 1 bis 10 mm.

Das Einbringen der polymerisierbaren Zusammensetzung in Schritt b) erfolgt vorzugsweise innerhalb von 48 Stunden (h) nach dem Erhöhen der Oberflächenenergie in Schritt a). Auf diese Weise wird sichergestellt, dass die Oberflächenenergie in der Zwischenzeit keinen wesentlichen Schwankungen unterworfen wird. So kann das Einbringen der polymerisierbaren Zusammensetzung in Schritt b) z.B. 60 h oder weniger, 48 h oder weniger, 24 h oder weniger, 12 h oder weniger, 2 h oder weniger, oder 1 h oder weniger nach dem Erhöhen der Oberflächenenergie in Schritt a) erfolgen. In einer besonders bevorzugten Ausführungsform erfolgt das Einbringen nach 24 h oder weniger (d.h. innerhalb von 24 h) nach dem Erhöhen der Oberflächenenergie in Schritt a).

Die Kontaktflächen der zwei Silikatglasscheiben haben somit bei Einbringen der polymerisierbaren Zusammensetzung in Schritt b) eine Oberflächenenergie von 65 mN/m oder mehr. "Bei" Einbringen bedeutet in diesem Zusammenhang unmittelbar vor dem Inkontaktkommen der Kontaktfläche mit der polymerisierbaren Zusammensetzung. In bevorzugten Ausführungsformen betrifft die Erfindung somit ein Verfahren in dem die Kontaktflächen bei Einbringen der polymerisierbaren Zusammensetzung eine Oberflächenenergie von 65 mN/m oder mehr aufweisen, vorzugsweise 72 mN/m. Eine ausreichend hohe Oberflächenenergie kann sichergestellt werden, indem Silikatglasscheiben verwendet werden, die 12 h oder weniger, bevorzugt 6 h oder weniger vor dem Einbringen der polymerisierbaren Zusammensetzung Kontaktflächen aufweisen, die eine Oberflächenenergie von 65 mN/m oder mehr aufweisen, vorzugsweise 72 mN/m.

Vorzugsweise werden die Silikatglasscheiben für die Polymerisierung in Schritt c) vertikal geführt. In einem weiteren Aspekt betrifft die Erfindung eine Verbundscheibe, die durch ein hierin beschriebenes Verfahren erhältlich ist.

In einem anderen Aspekt betrifft die Erfindung eine Verwendung einer Verbundscheibe für Scheiben, wie z.B. Fensterscheiben für Schiffe Hochhäuser und weitere Anwendungen, für die das erheblich reduzierte Gewicht der Verbundscheiben von Vorteil ist; Sicherheitsscheiben; Fenster, wie z.B. Sicherheitsfenster, Dachfenster, Schaufenster und Fahrzeugfenster; Glastüren; Wintergärten; Gewächshäuser; Lärmschutzwände; Aquarien; Vitrinen, wie z.B. Sicherheitsvitrinen; Verkaufstheken; Messebau und/oder Balkonbrüstungen. Erfindungsgemäß besonders bevorzugt ist die Verwendung in Fensterscheiben für Schiffe und Hochhäuser.

**Kurze Beschreibung der Figuren:**

**Figur 1** zeigt einen Vergleich des Einflusses verschiedener Aktivierungsverfahren, die Aktivierungslösungen verwenden, auf die Oberflächenenergie von 1 mm Floatglas (Berliner Glas 05/2015).

**Figur 2** zeigt einen Vergleich des Einflusses verschiedener physikalischer Aktivierungsverfahren (Coronabehandlung, Linearplasmabehandlung, Ozonbehandlung), die Aktivierungslösungen verwenden, auf die Oberflächenenergie von 1 mm Floatglas (Berliner Glas 05/2015).

**Figur 3** zeigt einen Vergleich des Einflusses verschiedener Aktivierungsverfahren, die Aktivierungslösungen verwenden, auf die Oberflächenenergie von 0,15 mm Borosilikatglase (Knittel).

**Figur 4** zeigt einen Vergleich der Veränderungen der Oberflächenenergie über eine Zeitspanne von 7 Tagen nachdem die Oberflächenenergie durch Aktivierung mittels Tauchen oder Fluten in KOH Lösung oder Ozonbehandlung auf mehr als 72 mN/m erhöht wurde.

**Figur 5** zeigt einen Vergleich der für einen Durchschlag nötigen Fallhöhe für Verbundscheiben, die vorgespanntes CVG Glas oder normales Floatglas enthalten und verschiedene Dicken aufweisen. Die Dicke der Platten ist ebenfalls dargestellt. Im Folgenden soll die Erfindung anhand dreier Beispiele näher beschrieben werden.

**Beispiel 1:**

**Herstellung einer erfindungsgemäßen Verbundscheibe**

Eine Lösung bestehend aus 20 000 g Methylmethacrylat, 350,4 g Glycidylmethacrylat, 6,2g AIBN sowie 2,1 g ADVN wurde 30 min bei Raumtemperatur gerührt. In gleicher Weise wurde eine Lösung, die aus 206,1g 3-Methacryloyloxypropyl-triethoxysilan (MEMO), 8,2g Methacrylsäure und 41,2 g dest. Wasser zusammensetzt, bei Raumtemperatur gerührt, bis die anfängliche Inhomogenität in eine homogene Suspension übergeht. Beide Lösungen wurden anschließend vereint und nochmals 10 min bei Raumtemperatur weitergerührt. Die resultierende Gesamtlösung entsprach einer hierin beschriebenen polymerisierbaren Zusammensetzung.

Zwei Floatglasplatten der Größe 1340 x 2100 mm und der Dicke 1 mm wurden dann auf der der polymerisierbaren Zusammensetzung zugewandten Seite zunächst durch Waschen mit Wasser von Trennmittel befreit. Anschließend wurden die Glasplatten aktiviert, indem sie vollständig mit einer Lösung aus 1000 mL dest. Wasser, 1000 mL Isopropanol und 60 g Kaliumhydroxid benetzt wurden. Die Lösung wurde zuvor 1 Stunde bei Raumtemperatur gerührt. Die auf der der polymerisierbaren Zusammensetzung zugewandten Seite derart benetzten Glasscheiben wurden in benetztem Zustand für 15 min stehen gelassen. Anschließend wurde die Aktivierungslösung von der Glasoberfläche entfernt, indem die Glasscheiben bis zur Neutralität mit Wasser gewaschen und anschließend getrocknet wurden. Die aktivierten Glasplatten wurden nun in einer vertikalen beheizbaren Kammer positioniert und unter Verwendung einer Trenn- bzw. Dichtschnur, z. B. aus Gummi oder PVC, auf den gewünschten Abstand (hier: 8 mm), welcher die spätere Dicke des Kerns bestehend aus dem Polymerisat bestimmt, eingestellt. Durch eine solche vertikale Versuchsanordnung findet der Schrumpf, welcher bei der Polymerisation der Zusammensetzung auftritt, ausschließlich an der Oberseite der Anordnung statt. So wird eine ungleiche Schichtdicke vermieden. Es ist bekannt, dass der Trommsdorff-Norrish Effekt während einer Polymerisation zu übermäßigem Erhitzen und zur Riss- und Blasenbildung führen kann. Die Polymerisation wurde daher bei 50 °C gestartet und bei Einsetzen des Trommsdorff-Norrish-Effektes auf 43 °C abgekühlt und anschließend bis zur vollständigen Härtung auspolymerisiert. Die Polymerisation wurde in einer inertisierten Kammer, d.h. mit einem Stickstoffstrom über der offenen Kammer, durchgeführt.

Auf im Wesentlichen die gleiche Weise wurden für spätere Versuche (siehe unten) auch Verbundscheiben mit Einscheibensicherheitsglas (ESG) - Scheiben hergestellt. ESG-Scheiben sind gehärtet/vorgespannt.

**Beispiel 2:**

**Vergleich unterschiedlicher Aktivierungsverfahren**

Zur Ermittlung und zum Vergleich der erzeugbaren Oberflächenenergien wurden verschiedene Glas-Aktivierungsverfahren an Floatglas (Floatglas, 200 x 300 x 1 mm, Berliner Glas; Floatglas, 300 x 300 x 8 mm, Tesco) und Borosilikatglas (200 x 300 x 0,15 mm, Knittel) getestet.

Die folgenden Aktivierungslösungen wurden getestet, indem die Glasscheiben bis zur vollständigen Benetzung in die Lösung eingelegt wurden. Nach einer variablen Einwirkzeit wurde die Oberflächenenergie in 3 Bereichen auf der Scheibe mit einem Kontaktwinkelmessgerät (Hersteller: Krüss) gemessen.

<u>Aktivierungslösungen:</u>

Kaliumhydroxidlösung, 3%ig (5,0 Wasser: 4,7 Isopropylalkohol (IPA): 0,3 KOH)
Kaliumhydroxidlösung, 10%ig (5,0 Wasser: 4,0 IPA: 1,0 KOH)
Rubidiumhydroxidlösung, 3%ig (5,0 Wasser: 4,7 EtOH : 0,3 RbOH*H2O)
Natriumyhdroxidlösung, 3%ig (5,0 Wasser: 4,7 EtOH: 0,3 NaOH)
Natriumhydroxidlösung, 10%ig (5,0 Wasser: 4,0 IPA: 1,0 NaOH)

Bei einer Einwirkzeit von 15 min veränderten sich die Oberflächenenergien des Floatglases (Berliner Glas, 200 x 300 x 1 mm, Charge 05/2015) wie folgt:

| | | |
|---|---|---|
| Unaktivierte Scheibe 1 | Luftseite | 57,87 ± 1,58 |
| | Zinnseite | 52,38 ± 0,83 |
| Unaktivierte Scheibe 2 | Luftseite | 57,80 ± 1,77 |
| | Zinnseite | 57,09 ± 1,93 |
| LiOH, 3%ig | Luftseite | 70,58 ± 2,05 |
| | Zinnseite | 70,29 ± 1,86 |
| NaOH, 3%ig | Luftseite | 72,02 ± 3,09 |
| | Zinnseite | 72,15 ± 3,46 |
| NaOH, 10%ig | Luftseite | 72,65 ± 2,96 |
| | Zinnseite | 70,66 ± 2,55 |
| KOH, 3%ig | Luftseite | 72,16 ± 2,26 |
| | Zinnseite | 69,25 ± 2,08 |
| KOH, 10%ig | Luftseite | 72,68 ± 3,30 |
| | Zinnseite | 70,79 ± 2,15 |
| RbOH, 3%ig | Luftseite | 72,12 ± 3,32 |
| | Zinnseite | 72,66 ± 3,21 |

Alle getesteten basischen Hydroxidlösungen führten sowohl für die Zinn- als auch für die Luftseite zu einer vergleichbar ausgeprägten Aktivierung, d.h. einer starken Erhöhung der Oberflächenenergie (vgl. Figur 1). Auf der Luftseite werden in der Regel Werte von 72 mN/m erreicht, auf der Zinnseite> 70 mN.

Es konnte kein signifikanter Unterschied zwischen einer 3%igen und einer 10% Kalium- oder Natriumhydroxidlösung festgestellt werden. Die Verwendung der 3% Lösungen ist somit ausreichend und weist Vorteile in Bezug auf Kosten und Sicherheit auf.

Durch verschiedene physikalische Aktivierungsverfahren veränderte sich die Oberflächenenergie des gleichen Floatglases (Berliner Glas, 200 x 300 x 1 mm, Charge 05/2015) wie in Figur 2 gezeigt. Alle physikalischen Aktivierungsverfahren waren in der Lage, die Oberflächenenergie sowohl auf der Zinn- als auch auf der Luftseite auf > 75 mN/m zu erhöhen.

Bei einer Einwirkzeit von 15 min veränderten sich die Oberflächenenergien des Borosilikatglases (200 x 300 x 0,15 mm, Knittel, Charge XX/2014) wie folgt (Seite 1 ist die Luftseite, Seite 2 die Zinnseite):

| | | |
|---|---|---|
| Unaktivierte Scheibe | Seite 1 | 40,33 ± 1,76 |
| | Seite 2 | 31,49 ± 1,08 |
| NaOH, 3%ig | Seite 1 | 70,44 ± 2,05 |
| | Seite 2 | 69,36 ± 2,36 |
| KOH, 3%ig | Seite 1 | 68,84 ± 3,04 |
| | Seite 2 | 70,23 ± 2,75 |

Alle getesteten basischen Hydroxidlösungen führten sowohl für die Zinn- als auch für die Luftseite zu einer vergleichbar ausgeprägten Aktivierung, d.h. einer starken Erhöhung der Oberflächenenergie (vgl. Figur 3). Auf beiden Seiten werden Werte von 65 mN/m oder mehr erreicht.

**Beispiel 3:**

**Haftung innerhalb der Verbundscheibe im Temperaturwechseltest**

Die Stabilität von aktivierten (erfindungsgemäßen) und nicht aktivierten Verbundscheiben wurde in einem Temperaturwechseltest analysiert. Die Verbundscheiben wurden mit dem Floatglas "Microfloat" (1340 x 2100 x 1mm, Pilkington) im Pilotanlagen-Maßstab hergestellt, wobei folgende Einwaagen durchgeführt wurden:

| Lösung | Material | Hersteller/Lieferant | Einwaage [g] |
|---|---|---|---|
| 1 | Methylmethacrylat<br>Glycidylmethacrylat<br>AIBN<br>BCHPC | Evonik<br>TCI<br>Sigma Aldrich<br>United Inhibitors | 16500,00<br>289,11<br>1,37<br>12,70 |
| 2 | Methacrylsäure<br>VE-Wasser<br>MEMO | ABCR<br>-<br>ABCR | 6,80<br>34,22<br>70,10 |
| KOH | KOH, techn.<br>IPA<br>VE-Wasser | BCD Biesterfeld<br>BCD Biesterfeld<br>- | 30,00<br>470,00<br>500,00 |

Die Glasscheiben wiesen auf der Innenseite (die zum PMMA-Kern gerichtet werden sollte) im ursprünglichen Zustand Oberflächenenergien von 40-55 mN/m auf. Die Scheiben wurden zunächst durch Behandlung mit 3%iger KOH-Lösung aktiviert. Hierzu wurden die Scheiben zweimal in Abständen von 5 min mit der KOH-Aktivierungslösung - auf einem Glasständer stehend - geflutet. Anschließend wurde die Scheibe mit VE- Wasser neutral gewaschen und (zur besseren Trocknung) mit IPA nachgespült.

Insgesamt wurden 8 Scheiben für 4 Ansätze, d.h. für 4 Verbundscheiben, verwendet.

Die Oberflächenenergie der Scheibeninnenseiten wurde vor und nach der Oberflächenbehandlung durch KOH gemessen:

| Scheibe Nr. | OE vor Aktivierung [mN/m] | OE nach Aktivierung [mN/m] |
|---|---|---|
| 1 a | 42 | 70 |
| 1 b | 55 | 72 |
| 2a | 51 | 71 |
| 2b | 55 | 74 |
| 3a | 48 | 72 |
| 3b | 61 | 73 |
| 4a | 52 | 71 |
| 4b | 50 | 72 |

Lösung 1 und Lösung 2 wurden separat angesetzt und nach einer Rührzeit von 30 min vereint. Die resultierende Lösung wurde weitere 10 min gerührt.

Die getrockneten, aktivierten Floatglasscheiben wurden senkrecht in eine Kammer, bestehend aus zwei heizbaren Aluminiumplatten, eingesetzt und durch Vakuum an diesen stehend (vertikal) fixiert. Anschließend wurde eine PVC-Dichtschnur der Dicke 8 mm eingelegt und die Kammer verschlossen. Nun wurde die vereinte Polymerisationslösung in die Kammer gefüllt und eine Polymerisation nach folgendem Temperaturverlauf durchgeführt: 1 h bei 60°C zur Anpolymerisation und Erstellung des Vorpolymerisates; anschließende Temperaturführung bei 45°C bis die Scheibe gehärtet war; und zuletzt ein Tempern für 4 h bei 120 °C.

Die Scheiben wurden im Anschluss mittels Wasserstrahlschneiden auf das Maß 200 x 300 mm zugeschnitten und die Kanten poliert und gesäumt.

Als Negativkontrolle wurde Silikatglas direkt vom Hersteller beschafft und die folgenden Oberflächenenergien

auf dem Glas gemessen:

| Scheibe Nr. | OE [mN/m] |
|---|---|
| 5a | 36 |
| 5b | 37 |
| 6a | 39 |
| 6b | 41 |

Die Herstellung von Verbundscheiben aus diesen Negativkontroll-Scheiben erfolgte komplementär zu dem zuvor beschriebenen Verfahren, jedoch ohne Aktivierung durch eine Benetzung mit KOH-Lösung.

Sämtliche Zuschnitte wurden einem Temperaturwechseltest zwischen -40°C zu 100°C unterzogen. Hierzu wurden die Scheiben 8 h bei 100°C erwärmt und anschließend direkt, d.h. ohne Akklimatisierung, für 16 h in eine Gefriertruhe mit -40°C gegeben. Im Anschluss wurden die Scheiben wieder im Ofen auf 100 °C erwärmt. Die Scheiben wurden nach jedem Zyklus auf Rissbildung sowie Ablösungen zwischen dem Glas und dem Kunststoffkern untersucht.

Bereits nach wenigen Zyklen konnten Unterschiede zwischen den aktivierten Scheiben 1- 4 und den nicht aktivierten Scheiben 5-6 festgestellt werden.

| **Zyklus** | **Nr. 1** | **Nr.2** | **Nr. 3** | **Nr.4** | **Nr. 5** | **Nr. 6** |
|---|---|---|---|---|---|---|
| **OE nach Aktivierung [mN/m]** | 70/72 | 71/74 | 72/73 | 71/72 | 36/37 | 39/41 |
| -40°C | i.O. | i.O. | i.O. | i.O. | i.O. | i.O. |
| 100°c | i.O. | i.O. | i.O. | i.O. | i.O. | i.O. |
| -40°C | i.O. | i.O. | i.O. | i.O. | Riss durch Scheibe | i.O. |
| 100°c | i.O. | i.O. | i.O. | i.O. | Ablösung Teilstücke Glas-PMMA | Risse am Rand |
| -40°C | i.O. | i.O. | i.O. | i.O. | Großflächige Ablösungen | Ablösung Teilstücke Glas-PMMA |
| 100°c | i.O. | i.O. | i.O. | i.O. | - | Großflächige Ablösungen |
| -40°C | i.O. | i.O. | i.O. | i.O. | - | - |
| 100°c | i.O. | i.O. | i.O. | i.O. | - | - |
| -40°C | i.O. | i.O. | i.O. | i.O. | - | - |
| i.O.= Scheibe in Ordnung, d.h. keine Risse oder Ablösungen feststellbar | | | | | | |

Die Verbundscheiben, deren Glasinnenseiten eine vorherige Aktivierung durchlaufen haben und deren Oberflächenergien dadurch auf > 70 mN/m mittels KOH-Behandlung erhöht wurden, zeigten eine signifikant bessere Haftung als nicht vorbehandelte, d.h. nicht aktivierte Scheiben.

**Beispiel 4:**

**Lebensdauer der Aktivierung von Floatglas**

Nach der Aktivierung von Silikatglasscheiben reduziert sich die Oberflächenenergie der Scheiben über die Zeit wieder. Diese Entwicklung wurde durch Aktivierung von Floatglasscheiben und anschließendem Messen der Oberflächenenergie mit einem Kontaktwinkelmessgerät über die Zeitspanne von sieben Tagen verfolgt. Die Entwicklung der Oberflächenenergie nach Aktivierung mit 3 Gew.-% KOH-Lösung und einer Ozon- Atmosphäre wurden verglichen.

Materialien

Kontaktwinkelmessgerät MSA von der Firma Krüss

Floatglas in den Maßen 350 x 350 mm in der Glasdicke 1 mm von Berliner Glas 3 Gew.-% KOH-Lösung

Ozonisator

Drei Floatglasscheiben im Format 350 x 350 mm wurden mithilfe eines Glasschneiders in vier gleich große Scheiben geschnitten, sodass insgesamt 12 Testmuster zur Verfügung standen. Die Muster wurden mit Wasser und Isopropanol vom Trennmittel befreit und gereinigt.

Zur Aktivierung der Glasscheiben wurden die Scheiben entweder mit einer 3 Gew.-% KOH-Lösung behandelt oder einer Ozon-Atmosphäre ausgesetzt. Bei der Behandlung mit der KOH-Lösung wurde sowohl das Fluten als auch das Eintauchen der Glasscheiben in die KOH-Lösung untersucht. Beim Fluten wurde die Glasscheibe einmal mit der KOH-Lösung benetzt und an der Luft stehen gelassen. Die Einwirkzeit betrug 10 min. Nach der Aktivierung wurden die Muster mit Wasser und Isopropanol gereinigt. Die Oberflächenenergie der Gläser wurde an der Luftseite mit Hilfe des Kontaktwinkelmessgeräts bestimmt. In einem Zeitraum von 7 Tagen wurden immer wieder Messungen durchgeführt, um die Oberflächenenergien in Abhängigkeit von der Zeit zu erfassen.

Nach der Aktivierung mittels Ozon und KOH-Lösung und der direkten Ermittlung der Oberflächenenergie wurde bei allen Gläsern eine Energie über 70 mN/m gemessen. Die Oberflächenenergie war nach der Ozonbehandlung geringfügig höher als beim Eintauchen und Fluten der Gläser mit KOH-Lösung (siehe Figur 4). Bei allen drei angewendeten Verfahren nahm die Oberflächenenergie mit der Zeit ab. Nach ca. drei Tagen war die Oberflächenenergie jeweils auf unter 65 mN/m abgesunken.

**Beispiel 5:**

**Kugelfallbeständigkeit von verschiedenen Verbundscheiben**

Die Kugelfallbeständigkeit einer Scheibe ist ein Indikator für die Schlagzähigkeit bzw. Kerbschlagzähigkeit einer Verbundscheibe. Die Kugelfallbeständigkeit von erfindungsgemäßen Verbundscheiben, die entweder Standard-Floatglas oder chemisch vorgehärtete (vorgespante) Glasscheiben (CVG) enthielten, wurde im Fallturm untersucht. Die Verbundscheiben wurden frei in der Luft, d.h. ohne Auflagefläche, mit einer 220 g schweren Stahlkugel beansprucht, wobei die Fallhöhe variiert wurde. Die folgenden Scheiben wurden dabei getestet:

| **Muster** | **Charakterisierung** | **Rezeptur** | **Dicke ca. [mm]** |
|---|---|---|---|
| MT_CVG 1,1mm | GPG mit Leoflex Glas unbearbeitet | Standard ohne GMA | 6,7 |
| MT_CVG 0,85mm | GPG mit Leoflex Glas unbearbeitet | Standard ohne GMA | 6,3 |
| MMA48 | GPG mit Float Glas 1mm beschnitten | Standard ohne GMA | 5 |
| MMA 10 | GPG mit FloatGlas beschnitten | Standard + GMA | 5,6 |
| MMA8 | GPG mit FloatGlas besäumt und poliert | Standard + GMA | 7,5 |
| MMA8 | GPG mit FloatGlas besäumt und poliert | Standard + GMA | 8,4 |

Wie aus Figur 5 zu erkennen ist, wiesen die CVG-basierten Verbundscheiben eine höhere Stoßtoleranz auf, als die entsprechenden Verbundscheiben mit Floatglas. So war der Durchschlag bei den CVG-basierten Verbundscheiben bei einer Fallhöhe von 6 m (Verbundscheibendicke: 6,7 mm) bzw. 4 m (6,3 mm) zu beobachten, während der Durchschlag bei allen Floatglas-basierten Verbundscheiben bei einer Fallhöhe zwischen 1 und 2 m zu beobachten war. Dünnere CVG Varianten waren dabei sogar dickeren Floatglas-basierten Varianten überlegen und zeigten eine außerordentlich gute Kugelfallbeständigkeit.

**Patentansprüche**

1. Verbundscheibe, die zwei Silikatglasscheiben umfasst, die durch eine Polymerisatschicht miteinander verbunden sind, **dadurch gekennzeichnet, dass** die Polymerisatschicht über kovalente Verbindungen durch einen Haftvermittler mit den Silikatglasscheiben verbunden ist, und dass die Verbundscheibe durch ein Verfahren erhältlich ist, in dem die Silikatglasscheiben vor der kovalenten Verbindung mit der Polymerisatschicht mindestens auf der der Polymerisatschicht zugewandten Kontaktfläche eine Oberflächenenergie von 65 mN/m oder mehr, gemessen mit dem Messgerät "MSA", aufweisen und die Polymerisatschicht aus einer polymerisierbaren Zusammensetzung polymerisiert wurde, die von 55% bis 98,99 Gew.% Methacrylat und/oder vorpolymerisiertes Methacrylat enthält.

**2.** Verbundscheibe nach Anspruch 1, **dadurch gekennzeichnet, dass** die Polymerisatschicht zu mindestens 60 Gew.-% aus Poly(meth)acrylaten besteht.

**3.** Verbundscheibe nach einem der Ansprüche 1 bis 2, **dadurch gekennzeichnet, dass** das Methacrylat Methylmethacrylatist.

**4.** Verbundscheibe nach einem der vorangehenden Ansprüche, **dadurch gekennzeichnet, dass** die Silikatglasscheiben unmittelbar vor der kovalenten Verbindung mit der Polymerisatschicht mindestens auf der der Polymerisatschicht zugewandten Kontaktfläche eine Oberflächenenergie von 65 mN/m oder mehr aufweisen.

**5.** Verbundscheibe nach einem der vorangehenden Ansprüche, **dadurch gekennzeichnet, dass** die Polymerisatschicht Polymethylmethacrylat (PMMA) - Verbindungen und 3-Methacryloyloxypropyl-triethoxysilan (MEMO) - Verbindungen umfasst.

**6.** Verbundscheibe nach einem der vorangehenden Ansprüche, **dadurch gekennzeichnet, dass** die Silikatglasscheiben Einscheibensicherheitsglasscheiben sind.

**7.** Verfahren zur Herstellung einer Verbundscheibe, Schritte umfassend, bei denen man

a) zwei Silikatglasscheiben bereitstellt und die Oberflächenenergie auf jeweils mindestens einer Kontaktfläche der Silikatglasscheiben auf 65 mN/m oder mehr, gemessen mit dem Messgerät "MSA", erhöht;
b) eine polymerisierbare Zusammensetzung zwischen die Kontaktflächen der zwei Silikatglasscheiben einbringt, wobei die polymerisierbare Zusammensetzung ein polymerisierbares und/ oder vorpolymerisiertes Monomer, und einen Haftvermittler umfasst; und
c) die polymerisierbare Zusammensetzung zwischen den Kontaktflächen der Silikatglasscheiben Polymerisationsbedingungen aussetzt, unter denen kovalente Verbindungen zwischen dem Haftvermittler und den Kontaktflächen der Silikatglasscheiben und zwischen dem Haftvermittler und der polymerisierbaren Zusammensetzung entstehen.

**8.** Verfahren nach Anspruch 7, **dadurch gekennzeichnet, dass** die Kontaktflächen bei Einbringen der polymerisierbaren Zusammensetzung eine Oberflächenenergie von 65 mN/m oder mehr aufweisen.

**9.** Verfahren nach einem der Ansprüche 7 oder 8, **dadurch gekennzeichnet, dass** die Oberflächenenergie durch Behandlung mit einem Anätzverfahren, wie z.B. der Behandlung mit einer alkalischen wässrigen Lösung, mittels Corona-, Ozon- und/oder (Linear-)Plasmabehandlung erhöht wird, wobei die Behandlung mit einer alkalischen wässrigen Lösung vorzugsweise mit einer Kaliumhydroxidlösung erfolgt.

**10.** Verfahren nach einem der Ansprüche 7 bis 9, **dadurch gekennzeichnet, dass** die polymerisierbare Zusammensetzung die Zusammensetzungen 1 und 2 umfasst, wobei Zusammensetzung 1 umfasst:

A) 0,5 - 5 Gewichtsteile einer Silicium-Verbindung der Formel (1):

$$[Si]_S R_n^1 R_m^2 O_p X_q \qquad (1)$$

wobei $R^1$ eine chemisch ungesättigte Kohlenstoff-Kohlenstoffgruppe aufweist, und vorzugsweise ein Alkenyl- oder Cycloalkenylrest mit 2 bis 12 Kohlenstoffatomen ist, der eine oder mehrere Estergruppen aufweisen kann,
$R^2$ ein Alkyl- oder Cycloalkylrest mit 1 bis 12 Kohlenstoffatomen ist,
X ein Halogenatom oder eine Alkoxygruppe mit 1 bis 8 Kohlenstoffatomen ist, vorzugsweise mit 1 bis 6 Kohlenstoffatomen,
s eine ganze Zahl größer gleich 1 ist,

n eine ganze Zahl von 1 bis 2*s+1 ist,
m eine ganze Zahl von 0 bis 2*s ist,
p eine ganze Zahl von 0 bis s-1 ist,
q eine ganze Zahl von 1 bis 2*s+1 ist, und
wobei s, n, m und q der folgenden Beziehung genügen:

$$n + m + q = 2 * s + 2;$$

B) 0,01 - 2 Gewichtsteile Wasser; und
C) 0 - 4,0 Gewichtsteile mindestens einer Säure;

und wobei Zusammensetzung 2 umfasst:

D) 0 - 5,0 Gewichtsteile mindestens eines (Meth)acrylates der Formel:

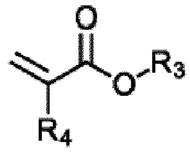

(II)

wobei $R_3$ ein aliphatischer oder cycloaliphatischer Rest mit 1 - 20 Kohlenstoffatomen und mindestens einer Hydroxyl- Thiol-, primären oder sekundären Amino- und/oder einer Epoxygruppe ist,
$R_4$ ein Wasserstoffatom oder eine Methylgruppe ist;

E) 55 - 98,99 Gewichtsteile eines polymerisierbaren, von D) verschiedenen Monomers, vorzugsweise eines ethylenisch ungesättigten Monomers;
F) 0 - 30 Gewichtsteile mindestens eines Polymers und/oder Copolymers, welches durch Polymerisation bzw. Copolymerisation mindestens eines ethylenisch ungesättigten Monomeren E) erhältlich ist;
G) 0 - 3 Gewichtsteile von weiteren Zuschlagstoffen, welche das Polymerisat in seinen Eigenschaften zu modifizieren vermögen.

11. Verfahren nach einem der Ansprüche 7 bis 10, **dadurch gekennzeichnet, dass** die polymerisierbare Zusammensetzung die Zusammensetzungen 1 und 2 umfasst, wobei die Zusammensetzung 1

A) 3-Methacryloyloxypropyl-triethoxysilan (MEMO) umfasst; und die Zusammensetzung 2
D) Glycidylmethacrylat (GMA) und
E) Methylmethacrylat (MMA) umfasst.

12. Verfahren nach einem der Ansprüche 7 bis 11, **dadurch gekennzeichnet, dass** die polymerisierbare Zusammensetzung von 55% bis 98,99 Gew.% Methacrylat und/oder vorpolymerisiertes Methacrylat enthält.

13. Verfahren nach einem der Ansprüche 7 bis 12, **dadurch gekennzeichnet, dass** die polymerisierbare Zusammensetzung die Zusammensetzungen 1 und 2 umfasst, wobei die Zusammensetzung 1 umfasst:

A) 0,5 - 5 Gewichtsteile 3-Methacryloyloxypropyl-triethoxysilan (MEMO);
B) 0,01 - 2 Gewichtsteile Wasser; und
C) 0 - 4,0 Gewichtsteile Methacrylsäure;

und die Zusammensetzung 2 umfasst:

D) 0 - 5,0 Gewichtsteile Glycidylmethacrylat (GMA);
E) 55 - 98,99 Gewichtsteile Methylmethacrylat (MMA);
G) 0 - 3 Gewichtsteile 2,2'-Azo-bis-isobutyronitril (AIBN) und/oder Di(4-tert.butylcyclohexyl)peroxydicarbonat (BCHPC)

**14.** Verbundscheibe erhältlich durch ein Verfahren gemäß einem der Ansprüche 7 bis 13, wobei die polymerisierbare Zusammensetzung von 55% bis 98,99 Gew.% Methacrylat und/oder vorpolymerisiertes Methacrylat enthält.

**15.** Verwendung einer Verbundscheibe gemäß einem der Ansprüche 1 bis 6 und 14 für Fensterscheiben in Schiffen oder Hochhäusern.

**Claims**

**1.** Composite pane which comprises two silicate glass panes which are interconnected by a polymerizate layer, **characterized in that** the polymerizate layer is connected to the silicate glass panes via covalent bonds by means of an adhesion promoter, and **in that** the composite pane can be obtained by a method in which, before being covalently bonded to the polymerizate layer, the silicate glass panes have a surface energy of 65 mN/m or more, measured using the "MSA" measuring apparatus, at least on the contact face facing the polymerizate layer, and the polymerizate layer is polymerized from a polymerizable composition which contains from 55 to 98.99 wt.% of methacrylate and/or prepolymerized methacrylate.

**2.** Composite pane according to claim 1, **characterized in that** the polymerizate layer consists of at least 60 wt.% of poly(meth)acrylates.

**3.** Composite pane according to either claim 1 or claim 2, **characterized in that** the methacrylate is methyl methacrylate.

**4.** Composite pane according to any of the preceding claims, **characterized in that,** immediately before being covalently bonded to the polymerizate layer, the silicate glass panes have a surface energy of 65 mN/m or more at least on the contact face facing the polymerizate layer.

**5.** Composite pane according to any of the preceding claims, **characterized in that** the polymerizate layer comprises polymethyl methacrylate (PMMA) compounds and 3-methacryloyloxypropyltriethoxysilane (MEMO) compounds.

**6.** Composite pane according to any of the preceding claims, **characterized in that** the silicate glass panes are single-pane toughened safety glass panes.

**7.** Method for producing a composite pane, comprising steps in which

a) two silicate glass panes are provided and the surface energy on at least one contact face of each of the silicate glass panes is increased to 65 mN/m or more, measured using the "MSA" measuring apparatus;
b) a polymerizable composition is introduced between the contact faces of the two silicate glass panes, the polymerizable composition comprising a polymerizable and/or prepolymerized monomer and an adhesion promoter; and
c) the polymerizable composition between the contact faces of the silicate glass panes is exposed to polymerization conditions under which covalent bonds are formed between the adhesion promoter and the contact faces of the silicate glass panes and between the adhesion promoter and the polymerizable composition.

**8.** Method according to claim 7, **characterized in that** the contact faces have a surface energy of 65 mN/m or more when the polymerizable composition is introduced.

**9.** Method according to either claim 7 or claim 8, **characterized in that** the surface energy is increased by means of treatment using an etching process, such as treatment using an alkaline aqueous solution, by means of corona treatment, ozone treatment and/or (linear) plasma treatment, the treatment being carried out using an alkaline aqueous solution, preferably using a potassium hydroxide solution.

**10.** Method according to any of claims 7 to 9, **characterized in that** the polymerizable composition comprises compositions 1 and 2, composition 1 comprising:

A) 0.5 to 5 parts by weight of a silicon compound of formula (1):

$$[Si]_S R^1_n R^2_m O_p X_q \qquad (1)$$

where $R^1$ has a chemically unsaturated carbon-carbon group, and is preferably an alkenyl or cycloalkenyl functional group that has 2 to 12 carbon atoms and can have one or more ester groups,
$R^2$ is an alkyl or cycloalkyl functional group having 1 to 12 carbon atoms,
X is a halogen atom or an alkoxy group having 1 to 8 carbon atoms, preferably having 1 to 6 carbon atoms,
s is an integer greater than or equal to 1,
n is an integer from 1 to 2*s+1,
m is an integer from 0 to 2*s,
p is an integer from 0 to s-1,
q is an integer from 1 to 2*s+1, and
where s, n, m and q satisfy the following relationship:

$$n + m + q = 2 * s + 2;$$

B) 0.01 to 2 parts by weight of water; and
C) 0 to 4.0 parts by weight of at least one acid;

and composition 2 comprising:

D) 0 to 5.0 parts by weight of at least one (meth)acrylate of the formula:

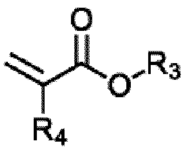

(II)

where $R_3$ is an aliphatic or cycloaliphatic functional group having 1 to 20 carbon atoms and at least one hydroxyl, thiol, primary or secondary amino group and/or an epoxy group,
$R_4$ is a hydrogen atom or a methyl group;

E) 55 to 98.99 parts by weight of a polymerizable monomer that is different from D), preferably an ethylenically unsaturated monomer;
F) 0 to 30 parts by weight of at least one polymer and/or copolymer which is obtainable by polymerization or copolymerization of at least one ethylenically unsaturated monomer E);
G) 0 to 3 parts by weight of other additives which are able to modify the properties of the polymerizate.

**11.** Method according to any of claims 7 to 10, **characterized in that** the polymerizable composition comprises compositions 1 and 2, composition 1 comprising

A) 3-methacryloyloxypropyltriethoxysilane (MEMO); and composition 2 comprising
D) glycidyl methacrylate (GMA) and
E) methyl methacrylate (MMA).

**12.** Method according to any of claims 7 to 11, **characterized in that** the polymerizable composition contains from 55 to 98.99 wt.% of methacrylate and/or prepolymerized methacrylate.

**13.** Method according to any of claims 7 to 12, **characterized in that** the polymerizable composition comprises compositions 1 and 2, composition 1 comprising:

A) 0.5 to 5 parts by weight of 3-methacryloyloxypropyltriethoxysilane (MEMO);
B) 0.01 to 2 parts by weight of water; and
C) 0 to 4.0 parts by weight of methacrylic acid;

and composition 2 comprising:

D) 0 to 5.0 parts by weight of glycidyl methacrylate (GMA);

E) 55 to 98.99 parts by weight of methyl methacrylate (MMA);
G) 0 to 3 parts by weight of 2,2'-azobisisobutyronitrile (AIBN) and/or di(4-tert-butylcyclohexyl)peroxydicarbonate (BCHPC).

**14.** Composite pane which can be obtained by a method according to any of claims 7 to 13, wherein the polymerizable composition contains from 55 to 98.99 wt.% of methacrylate and/or prepolymerized methacrylate.

**15.** Use of a composite pane according to any of claims 1 to 6 and 14 for window panes in ships or high-rise buildings.

**Revendications**

**1.** Vitre composite comprenant deux vitres en verre de silicate reliées par une couche de polymère, **caractérisée en ce que** la couche de polymère est liée aux vitres en verre de silicate par des liaisons covalentes au moyen d'un promoteur d'adhérence, et **en ce que** la vitre composite peut être obtenue par un procédé dans lequel les vitres en verre de silicate, avant la liaison covalente avec la couche de polymère, présentent une énergie de surface d'au moins 65 mN/m, mesurée à l'aide de l'appareil de mesure « MSA », au moins sur la surface de contact orientée vers la couche de polymère et la couche de polymère a été polymérisée à partir d'une composition polymérisable contenant de 55 à 98,99 % en poids de méthacrylate et/ou de méthacrylate prépolymérisé.

**2.** Vitre composite selon la revendication 1, **caractérisée en ce que** la couche polymère est constituée d'au moins 60 % en poids de poly(méth)acrylates.

**3.** Vitre composite selon l'une des revendications 1 à 2, **caractérisée en ce que** le méthacrylate est du méthacrylate de méthyle.

**4.** Vitre composite selon l'une des revendications précédentes, **caractérisée en ce que** les vitres en verre de silicate présentent une énergie de surface d'au moins 65 mN/m immédiatement avant la liaison covalente avec la couche de polymère, au moins sur la surface de contact orientée vers la couche de polymère.

**5.** Vitre composite selon l'une des revendications précédentes, **caractérisée en ce que** la couche polymère comprend des composés de polyméthacrylate de méthyle (PMMA) et des composés de 3-méthacryloyloxypropyl-triéthoxisilane (MEMO).

**6.** Vitre composite selon l'une des revendications précédentes, **caractérisée en ce que** les vitres en verre de silicate sont des vitres de sécurité à vitrage simple.

**7.** Procédé de fabrication d'une vitre composite, comprenant les étapes

a) de production de deux vitres en verre de silicate et d'augmentation de l'énergie de surface sur au moins chaque surface de contact des vitres en verre de silicate à au moins 65 mN/m, telle que mesurée par l'appareil de mesure « MSA » ;
b) d'introduction d'une composition polymérisable entre les surfaces de contact des deux vitres en verre de silicate, dans laquelle la composition polymérisable comprend un monomère polymérisable et/ou prépolymérisé, et un promoteur d'adhérence ; et
c) d'exposition de la composition polymérisable entre les surfaces de contact des vitres en verre de silicate à des conditions de polymérisation dans lesquelles des liaisons covalentes sont formées entre le promoteur d'adhérence et les surfaces de contact des vitres en verre de silicate et entre le promoteur d'adhérence et la composition polymérisable.

**8.** Procédé selon la revendication 7, **caractérisé en ce que** les surfaces de contact présentent une énergie de surface d'au moins 65 mN/m lors de l'introduction de la composition polymérisable.

**9.** Procédé selon l'une des revendications 7 ou 8, **caractérisé en ce que** l'énergie de surface est augmentée par un traitement à l'aide d'un procédé de gravure, tel qu'un traitement à l'aide d'une solution aqueuse alcaline, au moyen d'un traitement par effet corona, ozone et/ou plasma (linéaire), dans lequel le traitement à l'aide d'une solution aqueuse alcaline est effectué de préférence à l'aide d'une solution d'hydroxyde de potassium.

**10.** Procédé selon l'une des revendications 7 à 9, **caractérisé en ce que** la composition polymérisable comprend les compositions 1 et 2, dans lequel la composition 1 comprend :

A) 0,5 à 5 parties en poids d'un composé de silicium de formule (1) :

$$[Si]_S R_n^1 R_m^2 O_p X_q \qquad (1)$$

dans laquelle $R^1$ représente un groupe carbone-carbone chimiquement insaturé, et est de préférence un radical alcényle ou cycloalcényle de 2 à 12 atomes de carbone, qui peut comporter un ou plusieurs groupes ester,
$R^2$ représente un radical alkyle ou cycloalkyle de 1 à 12 atomes de carbone,
X représente un atome d'halogène ou un groupe alcoxy de 1 à 8 atomes de carbone, de préférence de 1 à 6 atomes de carbone,
s est un nombre entier supérieur ou égal à 1,
n est un nombre entier de 1 à 2*s + 1,
m est un nombre entier de 0 à 2*s,
p est un nombre entier de 0 à s-1,
q est un nombre entier de 1 à 2*s + 1, et
dans laquelle s, n, m et q satisfont la relation suivante :

$$n + m + q = 2*s + 2 ;$$

B) 0,01 à 2 parties en poids d'eau ; et
C) 0 à 4,0 parties en poids d'au moins un acide ;

et dans lequel la composition 2 comprend :

D) 0 à 5,0 parties en poids d'au moins un (méth)acrylate de formule :

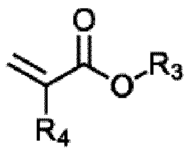
(II)

dans laquelle $R_3$ représente un radical aliphatique ou cycloaliphatique comportant 1 à 20 atomes de carbone et au moins un groupe hydroxyle, thiol, amino primaire ou secondaire et/ou un groupe époxy,
$R_4$ représente un atome d'hydrogène ou un groupe méthyle ;

E) 55 à 98,99 parties en poids d'un monomère polymérisable différent de D), de préférence un monomère éthyléniquement insaturé ;
F) 0 à 30 parties en poids d'au moins un polymère et/ou copolymère pouvant être obtenu par polymérisation ou copolymérisation d'au moins un monomère éthyléniquement insaturé E) ;
G) 0 à 3 parties en poids d'autres additifs pouvant modifier les propriétés du polymère.

**11.** Procédé selon l'une des revendications 7 à 10, **caractérisé en ce que** la composition polymérisable comprend les compositions 1 et 2, dans lequel la composition 1 compprend

A) du 3-méthacryloyloxypropyl-triéthoxysilane (MEMO) ; et **en ce que** la composition 2 comprend
D) de l'éthacrylate de glycidyle (GMA) et
E) du méthacrylate de méthyle (MMA).

**12.** Procédé selon l'une des revendications 7 à 11, **caractérisé en ce que** la composition polymérisable contient 55 à 98,99 % en poids de méthacrylate et/ou de méthacrylate prépolymérisé.

**13.** Procédé selon l'une des revendications 7 à 12, **caractérisé en ce que** la composition polymérisable comprend les compositions 1 et 2, dans lequel la composition 1 comprend :

A) 0,5 à 5 parties en poids de 3-méthacryloyloxypropyl-triéthoxysilane (MEMO) ;
B) 0,01 à 2 parties en poids d'eau ; et
C) 0 à 4,0 parties en poids d'acide méthacrylique ;

et la composition 2 comprend :

D) 0 à 5,0 parties en poids de méthacrylate de glycidyle (GMA) ;
E) 55 à 98,99 parties en poids de méthacrylate de méthyle (MMA) ;
G) 0 à 3 parties en poids de 2,2'-azo-bis-isobutyronitrile (AIBN) et/ou de di(4-tert-butylcyclohexyl)peroxydicarbonate (BCHPC)

**14.** Vitre composite pouvant être obtenue par un procédé selon l'une des revendications 7 à 13, dans laquelle la composition polymérisable contient 55 à 98,99 % en poids de méthacrylate et/ou de méthacrylate prépolymérisé.

**15.** Utilisation d'une vitre composite selon l'une des revendications 1 à 6 et 14 pour des vitres de navires ou de gratte-ciel.

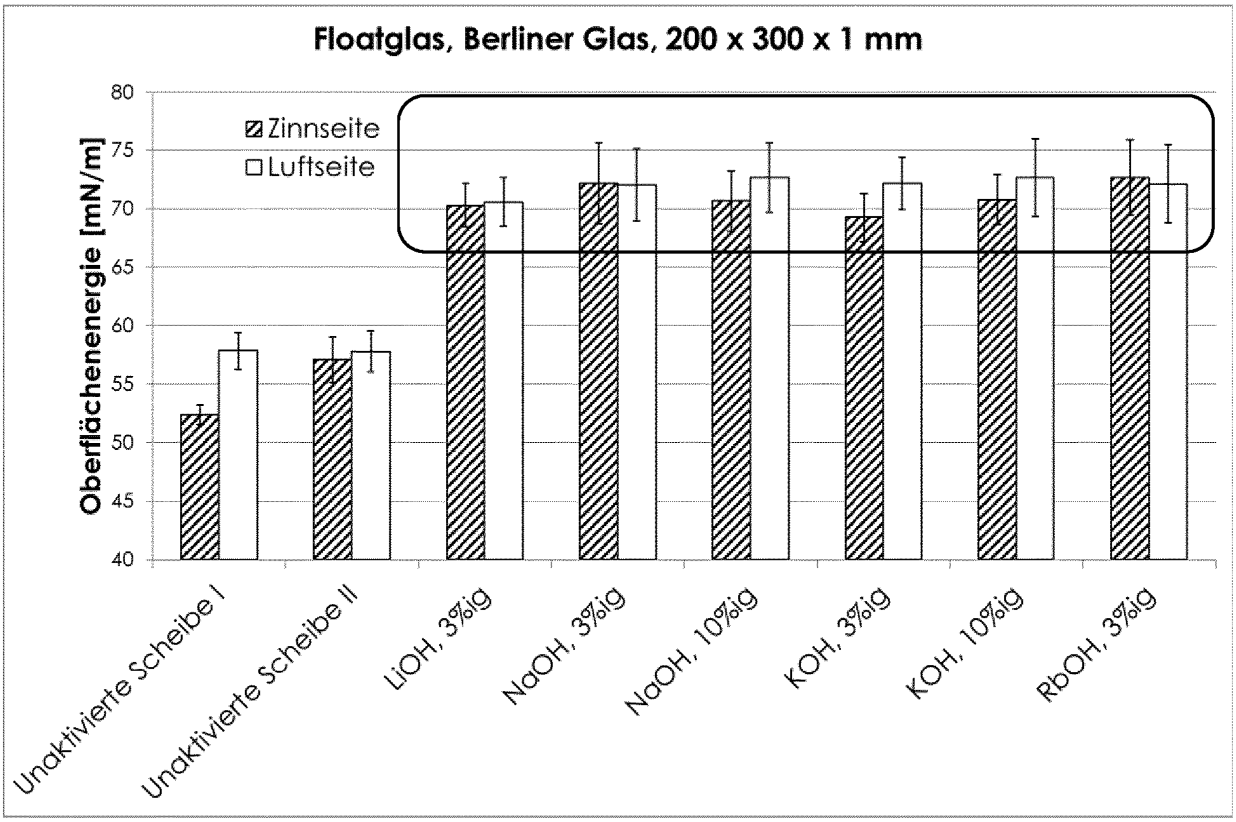


Figur 1

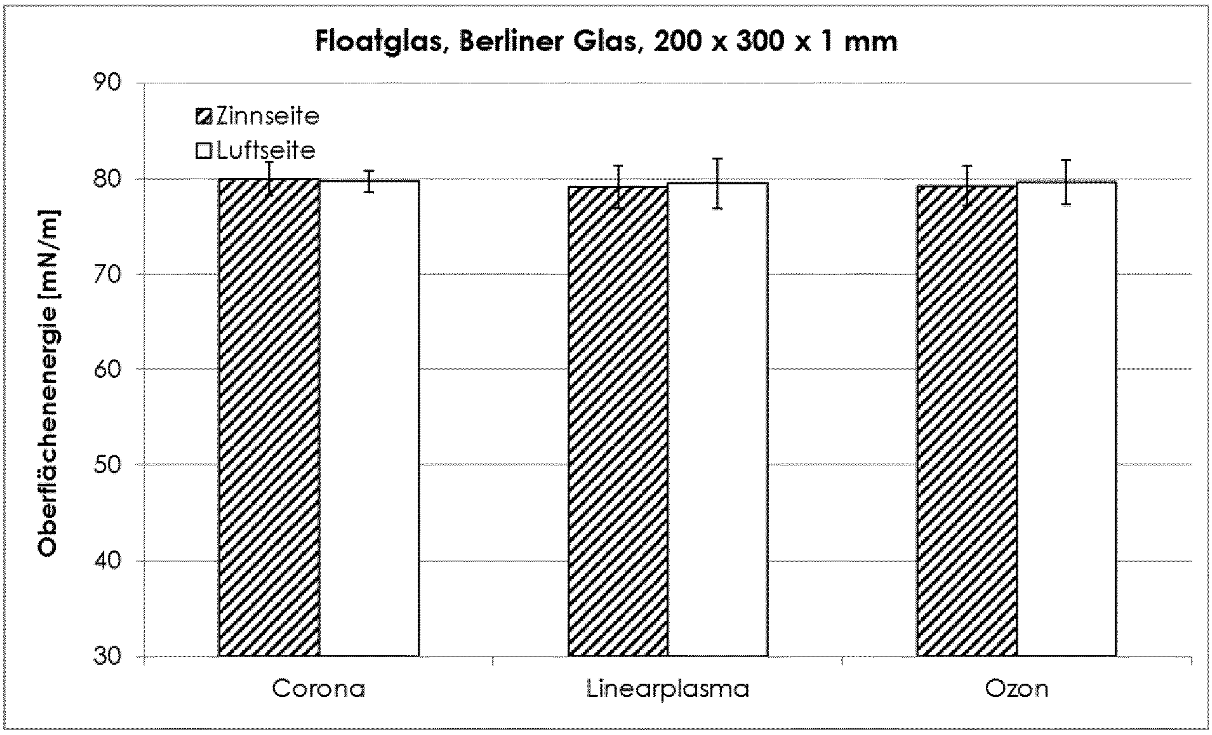


Figur 2

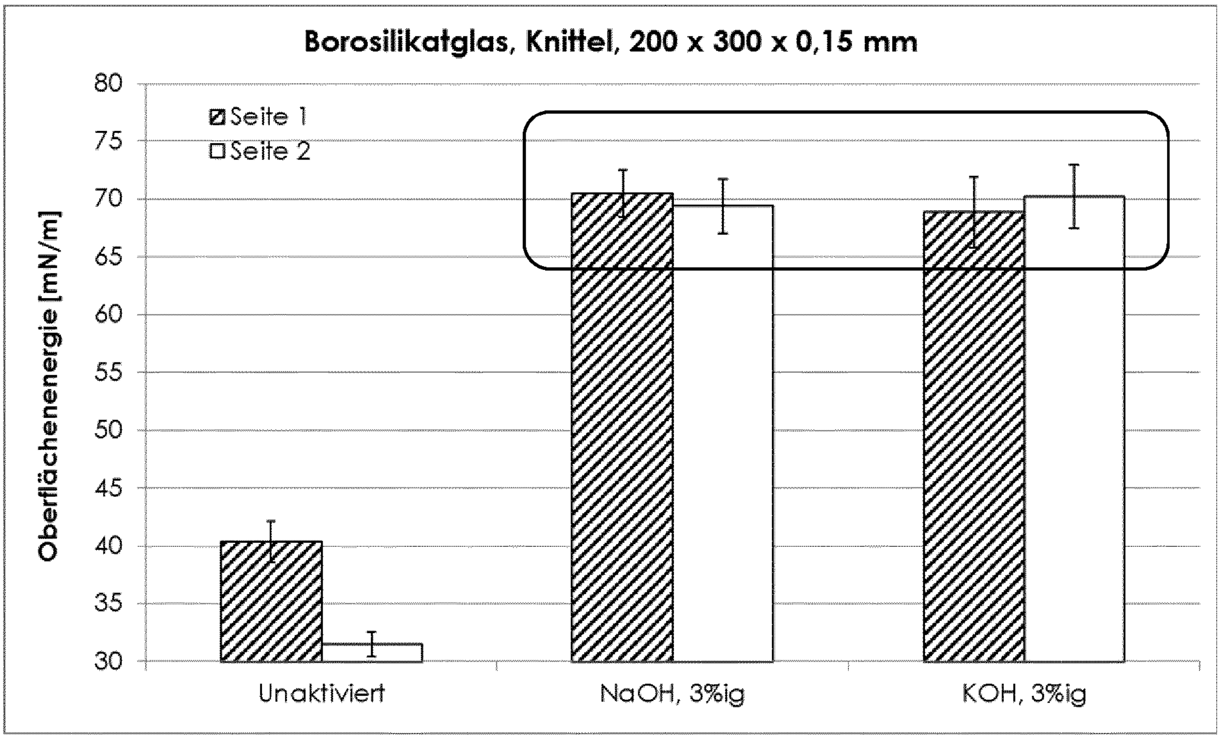


Figur 3

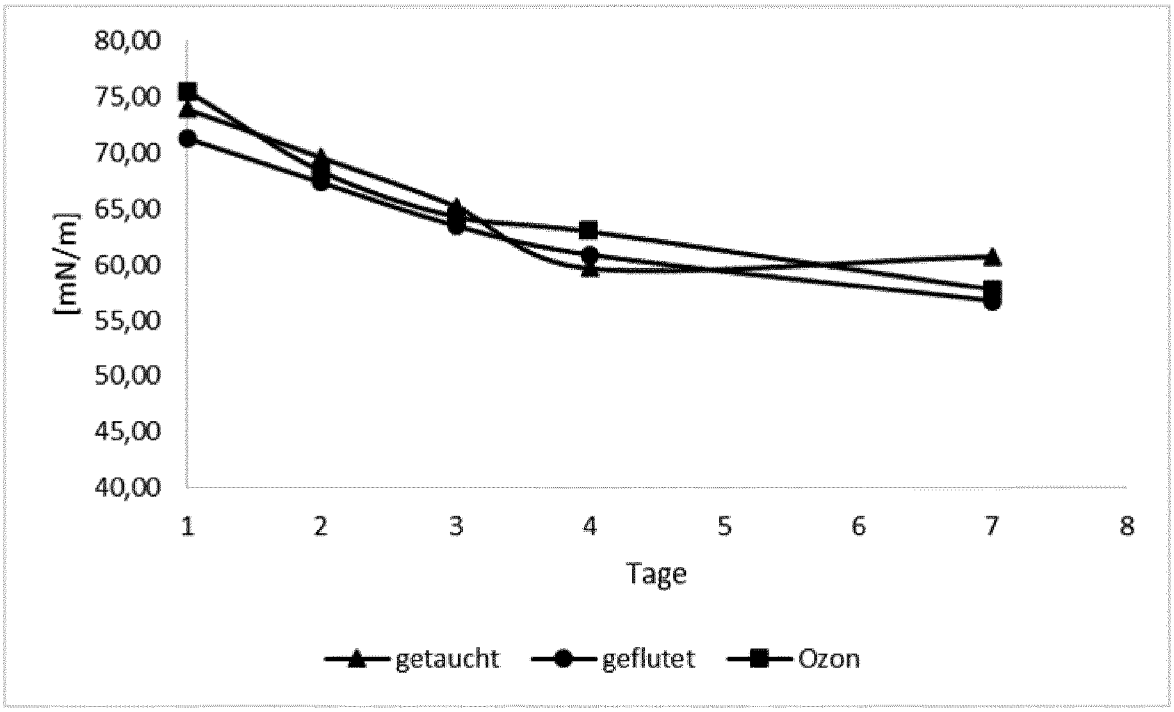


Figur 4

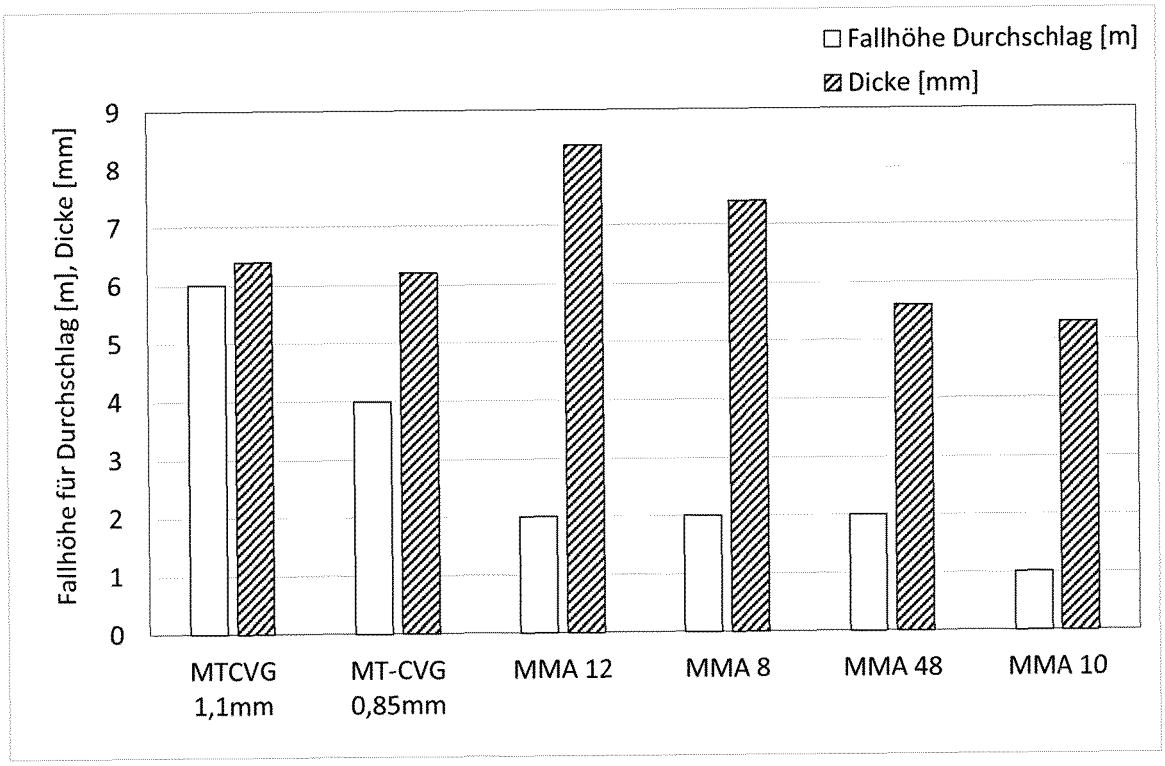

Fallhöhe Durchschlag [m]
Dicke [mm]
Fallhöhe für Durchschlag [m], Dicke [mm]
0
1
2
3
4
5
6
7
8
9
MTCVG 1,1mm
MT-CVG 0,85mm
MMA 12
MMA 8
MMA 48
MMA 10


**Figur 5**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- GB 1600867 A
- DE 2951763
- EP 1485416 A
- EP 1485416 B1